# EUROPEAN PATENT APPLICATION

(11) **EP 4 749 964 A1**
(43) Date of publication of application: **27.05.2026**
(21) Application number: 23946074.4
(22) Date of filing: 21.07.2023
(51) Int. Cl.: H04L 5/00

(54) **INFORMATION RECEIVING METHOD AND APPARATUS, INFORMATION SENDING METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: LIANG, Bin, Dongguan, Guangdong 523860 (CN); LIN, Yanan, Dongguan, Guangdong 523860 (CN); XU, Jing, Dongguan, Guangdong 523860 (CN)
(74) Representative: Mewburn Ellis LLP
(86) International application number: PCT/CN2023/108606
(87) International publication number: WO 2025/019978

(57) **Abstract**

The present application relates to the field of mobile communications. Disclosed are an information receiving method and apparatus, an information sending method and apparatus, and a device and a storage medium. The method, which is executed by means of a terminal, comprises: receiving part of first information transmitted by means of each control channel among at least two control channels, wherein part of the first information transmitted by means of a different control channel is different. By means of receiving first information jointly transmitted by means of a plurality of control channels, the limitation imposed by the control channels to the number of bits of the first information is relieved, thereby improving the flexibility of information transmission.

## Description

### TECHNICAL FIELD

Embodiments of the present disclosure relate to the field of mobile communication, and in particular, to an information receiving method, an information transmitting method, an information receiving apparatus, an information transmitting apparatus, a device, and a storage medium.

### BACKGROUND

In a new radio (NR) system, one piece of downlink control information (DCI) is supported to schedule transmission of multiple physical channels simultaneously, and the multiple physical channels are transmitted in different cells. For example, one piece of DCI may schedule physical channels in up to four cells simultaneously.

In related technologies, DCI adopts Polar coding. The sum of the number of bits of DCI and the number of bits of DCI's cyclic redundancy check (CRC) transmitted on a physical downlink control channel (PDCCH) shall not exceed 164 bits, where the number of bits of CRC is fixed at 24 bits. That is, the number of bits of DCI shall not exceed 140 bits. Therefore, DCI is constrained in terms of scheduling flexibility.

How to schedule physical channels without being constrained by the number of bits is a problem that needs to be solved.

### SUMMARY

Embodiments of the present disclosure provide an information receiving method, an information transmitting method, an information receiving apparatus, an information transmitting apparatus, a device, and a storage medium. The technical solution is as follows.

According to an aspect of an embodiment of the present disclosure, an information receiving method is provided. The method is performed by a terminal, and the method includes:
receiving respective partial information of first information transmitted on each control channel of at least two control channels, where the respective partial information of the first information transmitted on different control channels is different, and the first information is used for scheduling at least two physical channels.

According to an aspect of an embodiment of the present disclosure, an information receiving method is provided. The method is performed by a network device, and the method includes:
transmitting respective partial information of first information transmitted on each control channel of at least two control channels, where the respective partial information of the first information transmitted on different control channels is different, and the first information is used for scheduling at least two physical channels.

According to an aspect of an embodiment of the present disclosure, an information receiving apparatus is provided. The apparatus includes: a receiving module;
where the receiving module is configured to receive respective partial information of first information transmitted on each control channel of at least two control channels, where the respective partial information of the first information transmitted on different control channels is different, and the first information is used for scheduling at least two physical channels.

According to an aspect of an embodiment of the present disclosure, an information receiving apparatus is provided. The apparatus includes: a transmitting module;
where the transmitting module is configured to transmit respective partial information of the first information transmitted on each control channel of at least two control channels, where the respective partial information of the first information transmitted on different control channels is different, and the first information is used for scheduling at least two physical channels.

According to an aspect of an embodiment of the present disclosure, a computer readable storage medium is provided, where a computer program is stored in the computer-readable storage medium, and the computer program is configured to be executed by a communication device to perform the above-mentioned information receiving method or information transmitting method.

According to an aspect of an embodiment of the present disclosure, a chip is provided. The chip includes a programmable logic circuit and/or a program instruction, where the chip, when running, performs the above-mentioned information receiving method or information transmitting method.

According to an aspect of an embodiment of the present disclosure, a computer program product or a computer program is provided. The computer program product or the computer program includes a computer instruction, and the computer instruction is stored in a computer-readable storage medium. A communication device reads the computer instruction from the computer readable storage medium and executes the computer instruction to perform the above-mentioned information receiving method or information transmitting method.

The technical solutions provided in the embodiments of the present disclosure can bring the following beneficial effects.

By receiving the first information transmitted jointly on multiple control channels, the transmission of the first information is not constrained by the number of bits of a single control channel, thereby improving the flexibility of information transmission. Meanwhile, the utilization rate of the number of bits available for transmission of each control channel is improved, thereby improving the efficiency of information transmission.

### BRIEF DESCRIPTION OF THE DRAWINGS

In order to more clearly describe the technical solutions of the embodiments of the present disclosure, the following briefly introduces the drawings required for use in the description of the embodiments. It is apparent that the drawings described below are merely some embodiments of the present disclosure. For the ordinary person skilled in the art, other drawings may be obtained based on these drawings without any creative effort.
FIG. 1 illustrates a schematic diagram of a mobile communication system provided in an embodiment of the present disclosure.
FIG. 2 illustrates a flowchart of an information receiving method provided in an embodiment of the present disclosure.
FIG. 3 illustrates a schematic diagram of partial information of first information carried by at least two control channels provided in an embodiment of the present disclosure.
FIG. 4 illustrates a schematic diagram of a bit information cascading manner provided in an embodiment of the present disclosure.
FIG. 5 illustrates a schematic diagram of a bit information mapping manner provided in an embodiment of the present disclosure.
FIG. 6 illustrates a flowchart of an information receiving method provided in an embodiment of the present disclosure.
FIG. 7 illustrates a schematic diagram of transmission of at least two PDCCHs within a same time unit provided in an embodiment of the present disclosure.
FIG. 8 illustrates a schematic diagram of transmission of at least two PDCCHs within different time units provided in an embodiment of the present disclosure.
FIG. 9 illustrates a flowchart of an information transmitting method provided in an embodiment of the present disclosure.
FIG. 10 illustrates a block diagram of a structure of an information receiving apparatus provided in an embodiment of the present disclosure.
FIG. 11 illustrates a block diagram of a structure of an information transmitting apparatus provided in an embodiment of the present disclosure.
FIG. 12 illustrates a schematic diagram of a structure of a communication device provided in an embodiment of the present disclosure.

### DETAILED DESCRIPTION

In order to make the purposes, technical solutions and advantages of the present disclosure clearer, implementation of the present disclosure will be further described in detail below with reference to the drawings.

The network architecture and business scenario described in the embodiments of the present disclosure are intended to more clearly describe the technical solutions of the embodiments of the present disclosure, but do not constitute a limitation on the technical solutions provided in the embodiments of the present disclosure. A person skilled in the art will appreciate that, with the evolution of the network architecture and the emergence of new business scenarios, the technical solutions provided in the embodiments of the present disclosure are equally applicable to similar technical problems.

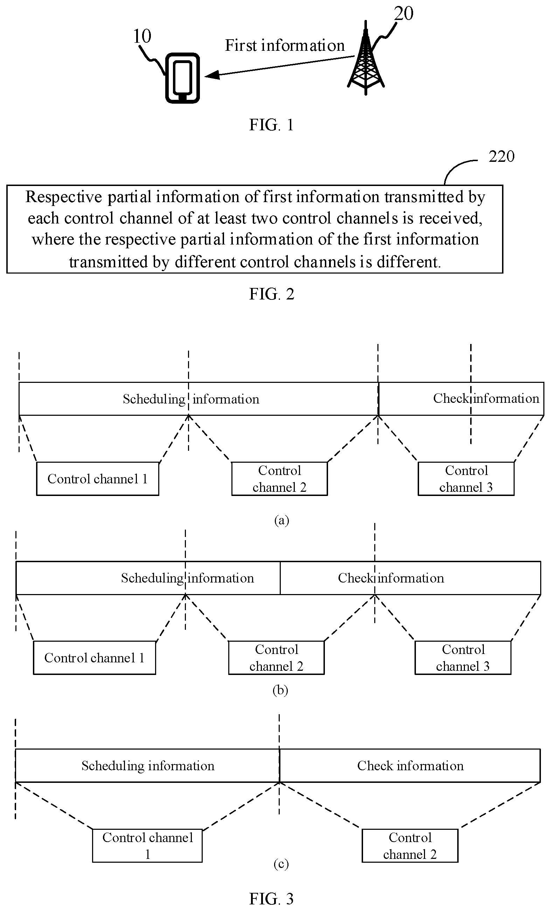

FIG. 1 illustrates a schematic diagram of a mobile communication system provided in an embodiment of the present disclosure. The mobile communication system may include a terminal 10 and a network device 20.

The terminal 10 may include various handheld devices, vehicle-mounted devices, wearable devices, or computing devices that have wireless communication capabilities, or other processing devices connected to a wireless modem, as well as various forms of user equipment (UE), mobile stations (MS), etc. For ease of description, in the embodiments of the present disclosure, the above-mentioned devices are collectively referred to as terminals.

The network device 20 is an apparatus deployed in an access network used to provide a wireless communication function for the terminal 10. The network device 20 may include various forms of macro base stations, micro base stations, relay stations, access points, etc. In systems employing different wireless access technologies, the name of a device having the function of the network device may vary. For example, in the 5G NR system, the device is referred to as an access network device, a gNodeB, or a gNB. With the evolution of communication technology, the name "network device" may vary. For ease of description, in the embodiments of the present disclosure, the above-mentioned apparatuses that provide wireless communication functions for the terminal 10 are collectively referred to as network devices.

Exemplarily, the terminal 10 receives first information transmitted by the network device 20, and the first information is transmitted on at least two control channels in blocks.

In some embodiments, the network device 20 may also be replaced with another terminal 10, for example, in a sidelink communication system in which communication is performed between two terminals.

It should be noted that the "5G NR system" in the embodiments of the present disclosure may also be referred to as 5G system or NR system, and those skilled in the art may understand its meaning. The technical solutions described in the embodiments of the present disclosure may be applied to the 5G NR system, as well as to a subsequent evolution system of the 5G NR system.

FIG. 2 illustrates a flowchart of an information receiving method provided in an embodiment of the present disclosure. The method is performed by a terminal, which may be the terminal 10 in the mobile communication system illustrated in FIG. 1. The method may include the following operations.

In Operation 220: respective partial information of the first information transmitted on each control channel of at least two control channels is received, where the respective partial information of the first information transmitted on different control channels is different.

In some embodiments, the first information is used for scheduling at least two physical channels. The physical channel may be at least one of an uplink physical channel or a downlink physical channel.

In some embodiments, the first information includes: scheduling information; or, scheduling information and check information. The check information is used for checking reception correctness of the scheduling information. The scheduling information may also be referred to as complete scheduling information. That is, the first information may include only the complete scheduling information. Alternatively, the first information may include the complete scheduling information and the check information used to check whether the complete scheduling information is correctly received by the terminal.

The scheduling information is used for scheduling transmission of the at least two physical channels, where the number of control channels used to transmit the scheduling information is less than or equal to the number of physical channels. That is, the number of the at least two control channels is less than or equal to the number of physical channels.

The at least two physical channels scheduled by the scheduling information include at least one of physical channels as follows:
- an uplink physical channel;
- a downlink physical channel; or
- an uplink physical channel and a downlink physical channel.

In an example, the scheduling information is used for scheduling at least two physical uplink shared channels (PUSCHs) simultaneously. In another example, the scheduling information is used for scheduling at least two physical downlink shared channels (PDSCHs) simultaneously. In another example, the scheduling information is used for scheduling at least one PUSCH and at least one PDSCH simultaneously.

In some embodiments, the scheduling information includes at least one piece of information as follows:
- a time-domain resource for data transmission;
- a frequency-domain resource for data transmission;
- a modulation and coding scheme (MCS);
- a precoding codebook;
- power control information (only for uplink transmission);
- a hybrid automatic repeat request (HARQ) process identifier (ID);
- a redundancy version (RV); or
- new Data Indication (NDI).

Exemplarily, the terminal receives the respective partial information of the first information transmitted on each control channel of at least two control channels, where the respective partial information of the first information transmitted on different control channels is different, and the scheduling information is used for scheduling transmission of at least two physical channels.

In some embodiments, the control channel is a PDCCH. That is, the first information is transmitted on at least two PDCCHs in blocks; and the terminal receives the respective partial information of the first information transmitted on each PDCCH of at least two PDCCHs. The respective partial information of the first information transmitted on different PDCCHs is different, and the scheduling information is used for scheduling the transmission of at least two physical channels.

The first information is transmitted on at least two control channels, each control channel of the at least two control channels is used to transmit the respective partial information of the first information, and the respective partial information of the first information transmitted on each control channel of the at least two control channels may be combined into the complete first information.

The partial information of the first information refers to multiple blocks (pieces) of information which are overlapping, partially overlapping, or non-overlapping obtained by dividing the first information. In the embodiment, the example is made in which the respective partial information of the first information transmitted on each control channel is information non-overlapping with one other. In some embodiments, each partial information of the first information is transmitted on one control channel. That is, each control channel of the at least two control channels is used to transmit respective partial information of the first information, the respective partial information is a part of the first information, and the respective partial information of the first information transmitted on different control channels is different from each other.

The partial information of the first information includes at least one of:
- all of the scheduling information;
- a part of the scheduling information;
- all of the check information; or
- a part of the check information.

FIG. 3 illustrates a schematic diagram of the partial information of the first information carried by at least two control channels provided in an embodiment of the present disclosure. In FIG. 3 (a), a part of the scheduling information is transmitted on a control channel 1, a part of the scheduling information is transmitted on a control channel 2, and a part of the scheduling information and all of the check information are transmitted on a control channel 3. In FIG. 3 (b), a part of the scheduling information is transmitted on the control channel 1, a part of the scheduling information and a part of the check information are transmitted on the control channel 2, and a part of the check information is transmitted on the control channel 3. In FIG. 3 (c), all of the scheduling information is transmitted on the control channel 1, and all of the check information is transmitted on the control channel 2. The above are only examples of the respective partial information of the first information transmitted by each control channel. The present disclosure does not limit the respective partial information of the first information carried by each control channel.

In some embodiments, bits in the first information are divided into at least two bit parts, and the at least two bit parts are transmitted by at least two control channels, and different control channels transmit different bit parts.

It should be noted that the partial information of the first information may also be referred to as partial scheduling information, valid information, or other names.

In addition to the partial information of the first information, each control channel of the at least two control channels further carries at least one piece of information as follows:
- block check information;
- a serial number of the control channel;
- a serial number of the partial information of the first information transmitted on the control channel;
- a total number of control channels for transmitting the first information; or
- a total number of pieces of partial information into which the first information is divided.

The block check information is used for checking the reception correctness of partial information of the first information transmitted on a current control channel. The serial number of the control channel is used for indicating a serial number of the current control channel in the at least two control channels. The serial number of the partial information of the first information transmitted on the control channel is used for indicating a serial number of the partial information of the first information transmitted on the current control channel among all pieces of partial information into which the first information is divided.

For a first control channel of the at least two control channels, the first control channel is any one of the at least two control channels, and the first control channel is used to transmit first partial information of the first information. In addition to the first partial information of the first information, the first control channel further carries at least one piece of information as follows:
- first block check information, used for checking the reception correctness of the first partial information of the first information transmitted on the first control channel;
- a serial number of the first control channel;
- a serial number of the first partial information of the first information transmitted on the first control channel;
- a total number of the at least two control channels; or
- a total number of pieces of partial information into which the first information is divided.

In some embodiments, one of the at least two control channels further carries information indicating termination of transmission. This information is used for informing the terminal that the at least two control channels have been fully received. In some embodiments, the control channel is the last control channel of the at least two control channels. The last control channel refers to at least one of channels as follows: a control channel with a latest time; a control channel with a highest frequency-domain position; or a control channel with a lowest frequency-domain position.

In some embodiments, a bit threshold is set for the number of bits of the partial information of the first information carried on a single control channel, and the number of bits of the respective partial information of the first information transmitted on each control channel does not exceed the bit threshold. That is, the number of bits of the partial information of the first information is less than or equal to the bit threshold. For example, the bit threshold is 140 bits. The bit threshold is related to at least one factor of a DCI format or a DCI encoding mode.

In some embodiments, based on the respective partial information of the first information transmitted on each control channel of the at least two control channels, the first information is determined through bit information cascading. That is, based on the partial information of the first information carried in at least two control channels, the first information is determined through bit information cascading. In other words, according to an order of the at least two control channels, pieces of partial information of the first information carried in the at least two control channels are sequentially concatenated and spliced, to obtain the first information.

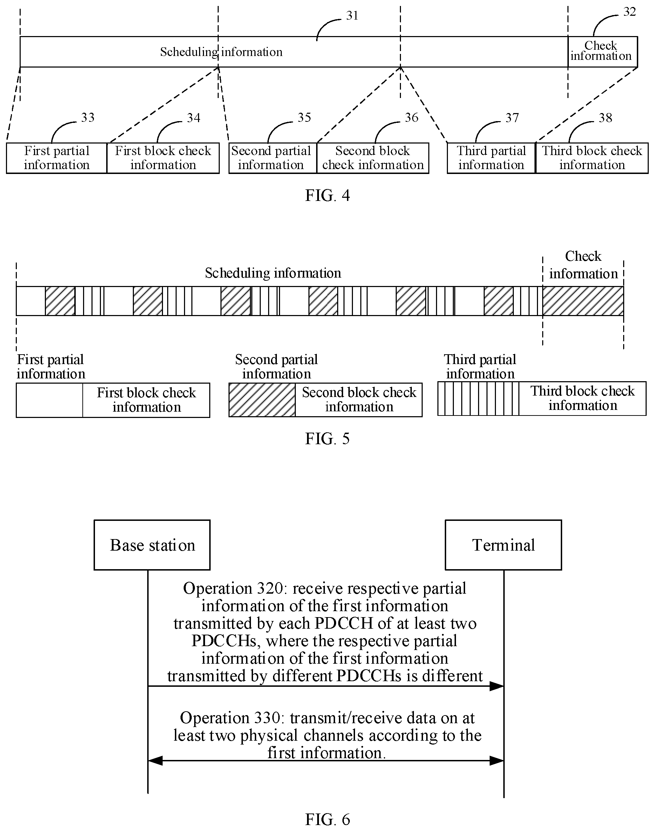

Please refer to FIG. 4, the first information includes scheduling information 31 and check information 32 for the scheduling information 31. The first information is divided into first partial information 33, second partial information 35 and third partial information 37 connected end to end. These three pieces of partial information of the first information have block check information respectively, such as first block check information 34, second block check information 36 and third block check information 38 illustrated in FIG. 4. That is, after receiving the partial information and the block check information of the first information on the three control channels, the terminal checks whether each partial information is received correctly by using the block check information. After confirming that each partial information is received correctly, the first partial information 33, the second partial information 35 and the third partial information 37 are connected end to end in the order of the control channels, to obtain the first information through the cascading.

In some other embodiments, based on the respective partial information of the first information transmitted on each control channel of the at least two control channels, the first information is determined through bit information mapping. That is, based on the partial information of the first information carried by the at least two control channels, the first information is determined through bit information mapping. That is, pieces of partial information of the first information carried in the at least two control channels are mapped according to a preset bit information mapping rule, so as to obtain the first information.

Please refer to FIG. 5, the first information includes the scheduling information and the check information for the scheduling information. The first information is divided into different groups of sub-blocks. The figure takes the example in which the first information is divided into three groups of sub-blocks: blank sub-blocks, diagonal shaded sub-blocks and vertical shaded sub-blocks. The mapping rule takes the example in which the scheduling information portion is divided into blank sub-blocks, diagonal shaded sub-blocks and vertical shaded sub-blocks that are equally gapped and the check information portion is taken as one diagonal shaded sub-block. Among them, the blank sub-blocks are combined into the first partial information (that is, the first partial information includes 6 blank sub-blocks), which is transmitted on the control channel 1 after the first block check information is generated. The diagonal shaded sub-blocks are combined into the second partial information (that is, the second partial information includes 7 diagonal shaded sub-blocks), which is transmitted on the control channel 2 after the second block check information is generated. The vertical shaded sub-blocks are combined into the third partial information (that is, the third partial information includes 6 vertical shaded sub-blocks), which is transmitted on the control channel 3 after the third block check information is generated. After receiving the pieces of partial information of the first information and the pieces of block check information of the first information on the three control channels, the terminal checks whether each partial information is received correctly by using the respective block check information. After confirming that each partial information is received correctly, the sub-blocks in each partial information (i.e., each group of sub-blocks) are mapped to corresponding positions equally gapped according to the mapping rule, to obtain the first information through splicing. FIG. 5 only illustrates one rule for mapping bit information, i.e., taking dividing the first information into three groups of sub-blocks as an example. However, the rule for bit information mapping is not limited thereto, which is not limited in the present disclosure.

The at least two control channels may be transmitted within the same or different time units. That is, the at least two control channels are transmitted within the same time unit; or the at least two control channels are transmitted within different time units.

In a case where the at least two control channels are transmitted within the same time unit, the at least two control channels are transmitted in different control channel candidates that are within the same time unit, or the at least two control channels are transmitted within different control channel units of the same control channel candidate.

The time unit is one of:
- a symbol set;
- a search space;
- a slot;
- a sub-frame; and
- a radio frame.

In some embodiments, the at least two control channels are transmitted within the same time unit and are transmitted in different control channel candidates. The order of the at least two control channels is used to determine the first information, and the order of the at least two control channels is determined by at least one of manners as follows:
- determining the order of the at least two control channels according to an order of sequence numbers of the control channel candidates where the at least two control channels are located;
- determining the order of the at least two control channels according to an order of reception times of the control channel candidates where the at least two control channels are located;
- determining the order of the at least two control channels according to an order of transmission times of the control channel candidates where the at least two control channels are located; or
- determining the order of the at least two control channels according to an order of frequency domains of the control channel candidates where the at least two control channels are located.

In some embodiments, in a case where the at least two control channels are transmitted within the same time unit and transmitted in different control channel candidates, if the time of the control channel candidates where the at least two control channels are located is the same, the order of the at least two control channels is determined according to the frequency-domain order of the control channel candidates where the at least two control channels are located.

In some embodiments, the at least two control channels are transmitted within the same time unit and transmitted in different control channel elements (CCEs) of the same control channel candidate.

In some embodiments, in the case where the at least two control channels are transmitted within the same time unit, the at least two control channels have the same aggregation level. For example, when the control channel is a PDCCH, the number of CCEs occupied by each PDCCH is the same.

In some other embodiments, in the case where the at least two control channels are transmitted within the same time unit, the at least two control channels have different aggregation levels. For example, the respective aggregation level of each control channel may be configured individually.

In the case where the at least two control channels have the same aggregation level, after the first (first one) control channel is received through blind detection, the receiving position(s) of other control channel(s) may be obtained. That is, the first control channel of the at least two control channels is received using blind detection, and the receiving positions of other control channels of the at least two control channels are determined based on a receiving position of the first control channel. For example, in response to receiving the first control channel at a CCE2 in one control channel, it may be determined that the second control channel may be received at a CCE3, and so on. In this way, the number of blind detections is reduced and the transmission efficiency of the control channel is improved.

In some embodiments, the at least two control channels are transmitted within different time units, and each time unit includes one control channel. The order of the at least two control channels is used to determine the first information, and the order of the at least two control channels is determined according to the order of different time units.

Different time units have one of relationships as follows:
- being continuous time units; and
- being equally gapped time units.

The time unit is one of:
- a symbol set;
- a search space; and
- a slot.

For example, the different time units may be continuous slots or equally gapped slots. For another example, the different time units may be continuous symbol sets or equally gapped symbol sets. For another example, the different time units may be search spaces, which are within the same slot or different slots, corresponding to the same search space ID. For another example, the different time units may be search spaces with increasing search space ID or decreasing search space ID within the same slot.

Based on the above relationship between different time units, after the first control channel is received through blind detection, the receiving positions of other control channels may be obtained. That is, the first control channel of the at least two control channels is received using blind detection, and the receiving positions of other control channels of the at least two control channels are determined based on a receiving position of the first control channel. For example, the different time units are consecutive symbol sets. In response to receiving the first control channel in a symbol 0, it may be determined that the second control channel may be received in a symbol 1, and so on. In this way, the number of blind detections is reduced and the detection efficiency of the control channel is improved.

In some embodiments, the at least two control channels transmitted within different time units have at least one of relationships as follows:
- the at least two control channels occupying a same time-domain resource within different time units; or
- the at least two control channels occupying a same frequency-domain resource within different time units.

The same time-domain resource refers to that a relative position of a time-domain resource occupied by each of the at least two control channels in their respective time unit is the same. For example, the time-domain resource occupied by each of the at least two control channels is the third symbol in a respective slot where each of the at least two control channels is located.

In some embodiments, the number of bits of the partial information of the first information transmitted on each control channel is determined according to at least one piece of information as follows:
- a number of bits of the first information;
- a number of control channels;
- a configured number of bits of the partial information of the first information transmitted on each control channel; or
- a number of bits determined based on a DCI format.

For example, the number of bits of the partial information of the first information is a result of rounding up the number of bits of the first information divided by the number of control channels. For another example, the number of bits of the partial information of the first information is a number of bits determined according to transmission configuration. For another example, the number of bits of the partial information of the first information is the number of bits determined according to the DCI format, such as the number of bits of the partial information of the first information is the number of bits corresponding to DCI format 0_1.

It should be noted that, in some embodiments, during the transmission process, it is required that the number of bits of the partial information of the first information of at least two control channels be the same. If there is one control channel (e.g., the last control channel) that actually transmits less information bits than other control channels, redundant bits are added to it, so that the number of bits of the partial information of the first information transmitted on each control channel is the same.

The number of the control channels is determined based on one piece of information as follows:
- a number of control channels configured by a network device;
- a maximum number of schedulable data channels;
- a maximum number of schedulable carriers; and
- a number of carriers in a carrier set.

The number of bits determined based on the DCI format is one of:
- any one of numbers of bits corresponding to the DCI format; and
- a sum of at least two of the numbers of bits corresponding to the DCI format.

For example, the number of bits determined based on the DCI format is any one of the numbers of bits corresponding to DCI formats 0_0, 0_1, 0_2, 1_0, 1_1, and 1_2. For another example, the number of bits determined based on the DCI format is the sum of at least two of the numbers of bits corresponding to DCI formats 0_0, 0_1, 0_2, 1_0, 1_1, and 1_2, such as the sum of the numbers of bits corresponding to DCI format 0_0 and DCI format 0_1.

It should be noted that the number of bits corresponding to the control information format of the DCI may be the number of bits determined based on configuration, or the number of bits corresponding to the DCI format after the DCI format is aligned based on an alignment rule. Here, alignment refer to that when two DCI formats have different sizes, redundant bits are added to the DCI format with fewer bits so that the sizes of the two DCI formats are the same.

To sum up, in the method provided in the embodiments of the present disclosure, through receiving the first information that is transmitted on the at least two control channels in blocks, the transmission of the first information is not constrained by the size of the number of bits that can be carried by the control channel, thereby improving the flexibility of transmitting the first information. Meanwhile, the bits of control channel available for transmission are fully utilized, thereby reducing the complexity of control channel detection, and improving the efficiency of information transmission.

In addition, the number of physical channels scheduled by the first information is greater than or equal to the number of control channels, so that more physical channels may be scheduled through fewer control channels, thereby improving the flexibility and efficiency of scheduling and saving control channel resources.

In addition, through setting block check information for the partial information of the first information transmitted on the control channel, the reception correctness of the partial information of the first information may be checked, thereby ensuring the accuracy and correctness of the transmission of the partial information the first information, and improving the scheduling efficiency.

In addition, the at least two control channels may be transmitted within the same time unit or different time units, which improves scheduling flexibility.

FIG. 6 illustrates a flowchart of an information receiving method provided in an embodiment of the present disclosure. The method is performed by a terminal and a network device. The terminal may be the terminal 10 illustrated in FIG. 1, and the network device may be the network device 20 illustrated in FIG. 1. Taking the network device being a base station and the control channel being a PDCCH as an example, the method may include the following operations.

In Operation 320: respective partial information of the first information transmitted on each PDCCH of at least two PDCCHs is received, where the respective partial information of the first information transmitted on different PDCCHs is different.

In some embodiments, the first information is used for scheduling at least two physical channels. The physical channel may be at least one of an uplink physical channel or a downlink physical channel.

In some embodiments, the first information includes: scheduling information; or, scheduling information and check information. The check information is used for checking reception correctness of the scheduling information. The scheduling information may also be referred to as complete scheduling information. That is, the first information may include only the complete scheduling information. Alternatively, the first information may include the complete scheduling information and the check information used to check whether the complete scheduling information is correctly received by the terminal.

The scheduling information is used for scheduling transmission of the at least two physical channels, where the number of PDCCHs used to transmit the scheduling information is less than or equal to the number of scheduled physical channels. The physical channel scheduled by the scheduling information includes at least one of physical channels as follows:
- an uplink physical channel;
- a downlink physical channel; or
- an uplink physical channel and a downlink physical channel.

In an example, the scheduling information is used for scheduling at least two PUSCHs simultaneously. In another example, the scheduling information is used for scheduling at least two PDSCHs simultaneously. In another example, the scheduling information is used for scheduling at least one PUSCH and at least one PDSCH simultaneously.

The scheduling information includes at least one piece of information as follows:
- a time-domain resource for data transmission;
- a frequency-domain resource for data transmission;
- an MCS;
- a precoding codebook;
- power control information (only for uplink transmission);
- a HARQ process ID;
- an RV; or
- NDI.

Exemplarily, the terminal receives the respective partial information of the first information transmitted on each PDCCH of at least two PDCCHs, where the respective partial information of the first information transmitted on different PDCCHs is different, and the first information is used for scheduling at least two physical channels.

The first information is transmitted on at least two PDCCHs, each PDCCH of the at least two PDCCHs is used to transmit respective partial information of the first information, and the respective partial information of the first information transmitted on each PDCCH of the at least two PDCCHs may be combined into complete first information.

The partial information of the first information refers to multiple blocks (pieces) of information which are overlapping, partially overlapping, or non-overlapping obtained by dividing the first information. In the embodiment, the example is provided where the respective partial information of the first information transmitted on each PDCCH is information which is non-overlapping with each other. In some embodiments, each partial information of the first information is transmitted on one PDCCH. That is, each PDCCH of the at least two PDCCHs is used to transmit the respective partial information of the first information, where the partial information is a part of the first information, and the respective partial information of the first information transmitted on different PDCCHs is different from each other.

The partial information of the first information includes at least one of:
- all of the scheduling information;
- a part of the scheduling information;
- all of the check information; or
- a part of the check information.

Taking the number of PDCCHs being three as an example. In an example, a first part of the scheduling information is transmitted on a PDCCH1, a second part of the scheduling information is transmitted on a PDCCH2, and a third part of the scheduling information and all of the check information are transmitted on a PDCCH3. In another example, all of the scheduling information is transmitted on the PDCCH1, a first part of the check information is transmitted on the PDCCH2, and a second part of the check information is transmitted on the PDCCH3. In another example, the first part of the scheduling information is transmitted on the PDCCH1, the second part of the scheduling information is transmitted on the PDCCH2, and all of the check information is transmitted on the PDCCH3. The above is only an example of respective partial information of the first information transmitted on each PDCCH. The present disclosure does not limit the partial information of the first information carried by each PDCCH.

In addition to the partial information of the first information, each PDCCH of the at least two PDCCHs further carries at least one piece of information as follows:
- block check information;
- a serial number of the PDCCH;
- a serial number of the partial information of the first information transmitted on the PDCCH;
- a total number of PDCCHs used to transmit the first information; or
- a total number of pieces of partial information into which the first information is divided.

The block check information is used for checking the reception correctness of the partial information of the first information transmitted on a current PDCCH. The serial number of the PDCCH is used for indicating a serial number of the current PDCCH in the at least two PDCCHs. The serial number of the partial information of the first information transmitted on the PDCCH is used for indicating the serial number of the partial information of the first information transmitted on the current PDCCH among all pieces of the partial information into which the first information is divided.

For a first PDCCH of the at least two PDCCHs, the first PDCCH is any one of the at least two PDCCHs, and the first PDCCH is used to transmit first partial information of the first information. In addition to the first partial information of the first information, the first PDCCH further carries at least one piece of information as follows:
- first block check information, used for checking the reception correctness of the first partial information of the first information transmitted on the first PDCCH;
- a serial number of the first PDCCH;
- a serial number of the first partial information of the first information transmitted on the first PDCCH;
- a total number of the at least two PDCCHs; or
- a total number of pieces of partial information into which the first information is divided.

In some embodiments, one of the at least two PDCCHs further carries information indicating termination of transmission. This information is used for informing the terminal that the at least two PDCCHs have been fully received. In some embodiments, the PDCCH is the last PDCCH of the at least two PDCCHs. The last PDCCH refers to at least one of following channels as follows: a PDCCH with a latest time; a PDCCH with a highest frequency-domain position; or a PDCCH with a lowest frequency-domain position.

In some embodiments, a bit threshold is set for the number of bits of the partial information of the first information carried on a single PDCCH, and the number of bits of the respective partial information of the first information transmitted on each PDCCH does not exceed the bit threshold. That is, the number of bits of the partial information of the first information is less than or equal to the bit threshold. For example, the bit threshold is 140 bits. The bit threshold is related to at least one factor of a DCI format or a DCI encoding mode.

In some embodiments, based on the respective partial information of the first information transmitted on each PDCCH of the at least two PDCCHs, the first information is determined by bit information cascading. That is, based on the partial information of the first information carried in the at least two PDCCHs, the first information is determined by bit information cascading. In other embodiments, based on the partial information of the first information transmitted on each PDCCH of the at least two PDCCHs, the first information is determined through bit information mapping. That is, based on the partial information of the first information carried by the at least two PDCCHs, the first information is determined through bit information mapping.

The at least two PDCCHs may be transmitted within the same time unit or different time units. That is, the at least two PDCCHs are transmitted within the same time unit; or the at least two PDCCHs are transmitted within different time units.

In a case where the at least two PDCCHs are transmitted within the same time unit, the at least two PDCCHs are transmitted in different PDCCH candidates within the same time unit, or the at least two PDCCHs are transmitted in different CCEs of the same PDCCH candidate.

The time unit is one of:
- a symbol set;
- a search space;
- a slot;
- a sub-frame; and
- a radio frame.

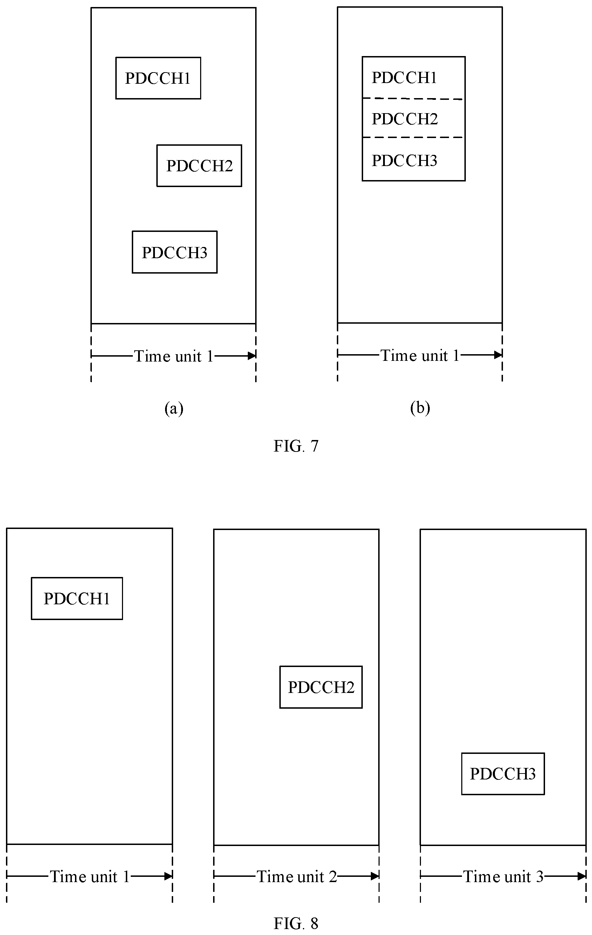

FIG. 7 illustrates a schematic diagram of transmission of at least two PDCCHs within the same time unit. Only one piece of first information is transmitted within each time unit. That is, multiple PDCCHs in each time unit are used to transmit the partial information of the same piece of the first information. The multiple PDCCHs use the same aggregation level.

FIG. 7(a) illustrates a schematic diagram of transmission of at least two PDCCHs through different PDCCH candidates within a time unit 1. As illustrated in the FIG. 7(a), a PDCCH1, a PDCCH2 and a PDCCH3 are taken as three independent PDCCHs, and are transmitted within the same time unit. The terminal performs blind detection on all PDCCH candidates within the time unit 1, and detects the PDCCH1, the PDCCH2 and the PDCCH3 respectively. After detection succeeds, the terminal determines the first information according to the partial information of the first information transmitted on the three PDCCHs. The manner of determining the first information according to the three pieces of partial information of the first information may be the bit information cascading manner as illustrated in FIG. 4, or the bit information mapping manner as illustrated in FIG. 5.

The order of the at least two PDCCHs is used to determine the first information. After receiving the at least two PDCCHs, the order of the at least two PDCCHs is determined in at least one of manners as follows:
- determining the order of the at least two PDCCHs according to an order of sequence numbers of the PDCCH candidates where the at least two PDCCHs are located;
- determining the order of the at least two PDCCHs according to an order of reception times of the PDCCH candidates where the at least two PDCCHs are located;
- determining the order of the at least two PDCCHs according to an order of transmission times of the PDCCH candidates where the at least two PDCCHs are located; or
- determining the order of the at least two PDCCHs according to an order of frequency domains of the PDCCH candidates where the at least two PDCCHs are located.

In some embodiments, in a case where the at least two PDCCHs are transmitted within the same time unit and transmitted in different PDCCH candidates, if the time of the PDCCH candidates where the at least two PDCCHs are located is the same, the order of the at least two PDCCHs is determined according to the frequency-domain order of the PDCCH candidates where the at least two PDCCHs are located.

FIG. 7(b) illustrates a schematic diagram of transmission of at least two PDCCHs through different CCEs of the same PDCCH candidate within the time unit 1. As illustrated in the FIG. 7(b), within one PDCCH candidate, the CCEs in the PDCCH candidate are divided and are used for a PDCCH1, a PDCCH2 and a PDCCH3 respectively. The number of CCEs occupied by each PDCCH is determined according to configuration, or according to the total number of CCEs and the number of PDCCHs. For example, the PDCCH candidate has 8 CCEs in total whose serial numbers correspond to 0 to 7, and the number of PDCCHs is 3, then, the number of CCEs occupied by each PDCCH is floor (8/3) = 2. That is, each PDCCH is configured to occupy 2 CCEs. In other words, a CCE0 and a CCE1 are used to transmit the PDCCH1, a CCE2 and a CCE3 are used to transmit the PDCCH2, and a CCE4 and a CCE5 are used to transmit the PDCCH3. Floor is a round-down operation.

In an implementation, in response to receiving the first information, the terminal performs blind detection for the PDCCH1 on the CCE0 and the CCE1 in the PDCCH candidate, performs blind detection for the PDCCH2 on the CCE2 and the CCE3, and performs blind detection for the PDCCH3 on the CCE4 and the CCE5. In another implementation, blind detection is performed on the CCE0 and the CCE1 in the PDCCH candidate for the PDCCH1, and if the PDCCH1 is successfully detected, the PDCCH2 and the PDCCH3 are directly parsed. For example, the PDCCH candidate includes 8 CCEs whose serial numbers correspond to 0 to 7, and the number of PDCCHs is 3, then, the number of CCEs occupied by each PDCCH is floor (8/3) = 2. That is, the CCE0 and the CCE1 are used to transmit the PDCCH1, the CCE2 and the CCE3 are used to transmit the PDCCH2, and the CCE4 and the CCE5 are used to transmit the PDCCH3.

Since PDCCHs have the same aggregation level, only one PDCCH needs be detected. After the first (first one) PDCCH is detected, subsequent PDCCHs are directly parsed according to the rule without the need for blind detection. That is, after the PDCCH1 is blindly detected on the CCE0 and the CCE1, the PDCCH2 is directly parsed on the CCE2 and the CCE3, and the PDCCH3 is parsed on the CCE4 and the CCE5. In another example, the aggregation level of the PDCCH is 1. In this case, if PDCCH1 is blindly detected on the CCE2, the PDCCH2 may be directly parsed on the CCE3, the PDCCH4 may be parsed on the CCE4, and so on. That is, the first PDCCH of the at least two PDCCHs is received in a blind detection manner, and the receiving positions of other PDCCHs of the at least two PDCCHs are determined based on the receiving position of the first PDCCH. In this way, blind detection only needs to be performed on the first received PDCCH, which reduces the number of blind detections for subsequent PDCCHs, and reduces the complexity of PDCCH detection.

FIG. 8 illustrates a schematic diagram of transmission of at least two PDCCHs within different time units. As illustrated in the FIG. 8, only one PDCCH is transmitted within each time unit. That is, a PDCCH1 is transmitted within a time unit 1, a PDCCH2 is transmitted within a time unit 2, and a PDCCH3 is transmitted within a time unit 3. The order of at least two PDCCHs is used to determine the first information, and the order of the PDCCHs is determined according to the order of different time units.

Different time units (i.e., the time unit 1 to the time unit 3) have one of relationships as follows:
- being continuous time units; and
- being equally gapped time units.

The time unit is one of:
- a symbol set;
- a search space; and
- a slot.

For example, the different time units may be continuous slots or equally gapped slots. For another example, the different time units may be continuous symbol sets or equally gapped symbol sets. For another example, the different time units may be search spaces, which are within the same slot or different slots, corresponding to the same search space ID. For another example, the different time units may be search spaces with increasing search space ID or decreasing search space ID within the same slot.

Based on the above relationship between different time units, after the first PDCCH is received through blind detection, the receiving positions of other PDCCHs may be obtained. That is, the first PDCCH of at least two PDCCHs is received using blind detection, and the receiving positions of other PDCCHs of at least two PDCCHs are determined based on the receiving position of the first PDCCH. For example, the different time units are consecutive slots. In response to receiving the first PDCCH within a slot 1, it may be determined that the second PDCCH may be received within a slot 2, and so on. In this way, the number of blind detections for PDCCHs after the first PDCCH is reduced, thereby improving the transmission efficiency of the control channel.

In some embodiments, the at least two PDCCHs transmitted within different time units have at least one of relationships as follows:
- at least two PDCCHs occupying a same time-domain resource within different time units; and
- at least two PDCCHs occupying a same frequency-domain resource within different time units.

The same time-domain resource refers to that a relative position of a time-domain resource occupied by each of the at least two PDCCHs in their respective time unit is the same. For example, the time-domain resource occupied by each of the at least two PDCCHs is the third symbol in a respective slot where each of the at least two PDCCHs is located.

In some embodiments, the number of bits of the partial information of the first information transmitted on each PDCCH is determined according to at least one piece of information as follows:
- a number of bits of the first information;
- a number of PDCCHs;
- a configured number of bits of the partial information of the first information carried by each PDCCH; or
- a number of bits determined based on a DCI format.

In some embodiments, the number of bits of the respective partial information of the first information is determined according to the number of bits of the first information and the number of PDCCHs. An example is made by taking the number of bits of the first information being X and the number of PDCCHs being N.

One manner is that the number of bits of the partial information of the first information carried by the first N-1 PDCCHs is ceil(X/N), and the number of bits of the partial information of the first information carried by the last PDCCH is X-(N-1)*ceil(X/N). Alternatively, the number of bits of the partial information of the first information carried by the first N-1 PDCCHs is floor(X/N), and the number of bits of the partial information of the first information carried by the last PDCCH is X-(N-1)*floor(X/N). However, in this manner, the number of bits of the partial information of the first information carried by the last PDCCH may be significantly different from that of other PDCCHs. In this case, the probability of successful reception of the last PDCCH is different from that of other PDCCHs, which will affect the determination and parse of the first information. Ceil is the round-up operation, and floor is the round-down operation.

Another manner is that the respective number of bits of the partial information of the first information carried by each of the first N-X+floor(X/N)*N PDCCHs is floor(X/N), and the respective number of bits of the partial information of the first information carried by each of the remaining X-floor(X/N)*N PDCCHs is ceil(X/N). In this manner, the respective number of bits of the partial information of the first information carried by each PDCCH is almost the same, and the respective parsing performance of each PDCCH is almost the same, which may ensure the probability of successful reception of PDCCH. That is, the remainder obtained by dividing the number of bits of the first information by the number of PDCCHs is used as the number of PDCCHs with the number of bits rounded up, and the remaining number of PDCCHs is used as the number of bits rounded down. For the PDCCH with the number of bits rounded up, the corresponding number of bits is the result obtained by dividing the number of bits of the first information by the number of PDCCHs and rounding up. For the PDCCH with the number of bits rounded down, the corresponding number of bits is the result obtained by dividing the number of bits of the first information by the number of PDCCHs and rounding down.

The number of PDCCHs is determined based on one piece of information as follows:
- a number of control channels configured by a network device;
- a maximum number of schedulable data channels;
- a maximum number of schedulable carriers; and
- a number of carriers in a carrier set.

That is, a format of the PDCCH may be explicitly determined according to network device configuration, for example, the number of PDCCHs is directly configured. Alternatively, the format of the PDCCH may be determined according to the configured maximum number of schedulable data channels/maximum number of schedulable carriers/number of carriers in the carrier set. For example, the number of PDCCHs is determined through the corresponding relationship in the following table.

**Table 1**

| Maximum number of schedulable data channels/maximum number of schedulable carriers/number of carriers in the carrier set | Number of PDCCHs |
|---|---|
| 3 | 2 |
| 4 | 3 |

In some other embodiments, the number of bits of the partial information of the first information is directly determined according to the configuration. That is, the configuration indicates the number of bits of the partial information of the first information.

In some other embodiments, the number of bits of the partial information of the first information is determined according to the DCI format. The DCI format used to determine the number of bits of the partial information of the first information may be any one of DCI formats as follows: 0_0, 0_1, 0_2, 1_0, 1_1, and 1_2. The number of bits of the partial information of the first information determined by this manner may be the number of bits of the DCI format determined according to the configuration, or may be the number of bits corresponding to the DCI format after alignment according to a specified DCI size alignment rule. In this case, it is necessary to include a DCI format indication in the PDCCH, and the DCI format indication is used to distinguish the DCI format for transmitting the first information and the DCI format for determining the number of bits of partial information of the first information. Alternatively, the serial number information in the PDCCH is used to implicitly distinguish the above two formats.

In the manner for determining the number of bits of the partial information of the first information according to the DCI format, the number of bits determined based on the control information format of the DCI (e.g., the DCI format 0_0, 0_1, 0_2, 1_0, 1_1, and 1_2) is one of numbers of bits as follows:
- any of the number of bits corresponding to the DCI format; and
- a sum of at least two of the number of bits corresponding to the DCI format.

That is, the number of bits of the partial information of the first information may be the number of bits corresponding to any one of the DCI formats 0_0, 0_1, 0_2, 1_0, 1_1, and 1_2. Alternatively, the number of bits of the partial information of the first information may be the sum of numbers of bits corresponding to any multiple formats.

It should be noted that the number of bits corresponding to the DCI format may be the number of bits determined based on the configuration, or the number of bits corresponding to the DCI format after the DCI format is aligned based on the alignment rule. Here, alignment refers to that when two DCI formats have different sizes, redundant bits are added to the smaller DCI format so that the sizes of the two DCI formats are the same.

When the number of bits of the partial information of the first information is the sum of the number of bits corresponding to multiple DCI formats, the number of PDCCHs may be reduced, thereby improving the transmission efficiency of the control channel. For example, the first information is 240 bits, the number of bits corresponding to the DCI format 0_0 is 50 bits, and the number of bits of the DCI format 0_1 is 70 bits; if the number of bits of the partial information of the first information transmitted on a PDCCH is determined to be 50 bits (which is the same as the DCI format 0_0), 5 PDCCHs are required; if the number of bits of the partial information of the first information transmitted on a PDCCH is determined to be 70 bits (which is the same as the DCI format 0_1), 4 PDCCHs are required; or if the number of bits of the partial information of the first information transmitted on a PDCCH is determined to be 120 bits (which is a sum of the DCI format 0_0 and the DCI format 0_1), only 2 PDCCHs are required.

It should be noted that, in some embodiments, during the transmission process, it is required that the number of bits of the partial information of the first information transmitted on at least two PDCCHs is the same. If there is one PDCCH (e.g., the last PDCCH) that actually transmits less information than the number of bits of other PDCCHs (i.e., PDCCHs other than the last PDCCH), redundant (padding) bits are added to the PDCCH with fewer bits, so that the respective number of bits of the respective partial information of the first information transmitted on each control channel is the same. For example, if the number of first information bits is X and the number of bits of the partial information of the first information carried by a configured PDCCH is Y, then there are ceil(X/Y) PDCCHs for transmission. The first floor(X/Y) PDCCHs each carry Y bits, and the last PDCCH carries X-Y*floor(X/Y) bits of information. Y*ceil(X/Y) padding bits are added to ensure that the sizes of pieces of partial information of the first information carried by multiple PDCCHs are the same, which facilitates blind detection. Padding bits are added only in the last PDCCH, which avoids the problem that the probability of successful reception of the last PDCCH is different from that of other PDCCHs due to the large difference between the number of bits carried by the last PDCCH and the number of bits carried by the other PDCCHs. Ceil is the round-up operation, and floor is the round-down operation.

In Operation 330: data is transmitted/received on at least two physical channels according to the first information.

After receiving the first information, the terminal obtains scheduling information for the physical channel. In some embodiments, the first information is information related to scheduling of the at least two physical channels.

The terminal transmits and/or receives data on the at least two physical channels according to the first information. For example, the terminal transmits data on at least two PUSCHs. For another example, the terminal receives data on at least two PDSCHs. For another example, the terminal transmits data on at least one PUSCH and receives data on at least one PDSCH.

To sum up, in the method provided in the embodiments of the present disclosure, through receiving the first information transmitted on at least two PDCCH in blocks, the transmission of the first information is not constrained by the size of the number of bits that can be carried by a single PDCCH, thereby improving the flexibility of transmitting the first information. Meanwhile, the bits of the PDCCH available for transmission are fully utilized, thereby reducing the complexity of control channel detection, and improving the efficiency of information transmission.

In addition, the first information may be used for scheduling the transmission of multiple physical channels. The first information is divided into multiple pieces of partial information for transmission in blocks, thereby removing the constraint on the number of bits of the control channel encoding and improving the flexibility of scheduling.

In addition, the number of physical channels scheduled by the first information may be greater than or equal to the number of PDCCHs, so that more physical channels may be scheduled by fewer control channels, thereby improving the flexibility and efficiency of scheduling and saving control channel resources, which effectively saves transmission counts and transmission resources of the scheduling information, compared with a situation where one piece of scheduling information may only schedule transmission of one physical channel. Accordingly, blind detection for PDCCH performed by the terminal is reduced and transmission efficiency is improved.

In addition, by setting block check information for the partial information of the first information transmitted on the PDCCH, the reception correctness of the partial information of the first information may be checked, thereby ensuring the accuracy and correctness of the partial information of the first information transmitted on the PDCCH and improving scheduling efficiency.

In addition, the at least two PDCCHs may be transmitted within the same time unit or different time units, which improves scheduling flexibility.

In addition, in the case where the at least two PDCCHs are independently transmitted within the same time unit, the existing PDCCH blind detection process is not changed, and the complete first information is determined based on detected multiple pieces of partial information of the first information, so that the scheduling of physical channel transmission may be achieved. In a case where the number of used PDCCHs is less than the number of scheduled physical channels, PDCCH resources are effectively saved.

In addition, in the case where the at least two PDCCHs use the same PDCCH candidate for transmission, only one PDCCH needs to be detected through blind detection, and subsequent PDCCHs may be parsed according to the rule. That is, blind detection is not required for subsequent PDCCHs, which may reduce the number of blind detections and the complexity of detecting PDCCHs.

In addition, in the case where the at least two PDCCHs are transmitted within different time units, since there is a corresponding relationship between the time units, after the first PDCCH is blindly detected, blind detection may be performed for subsequent PDCCHs in the corresponding time units according to the specified rule, thereby saving the number of blind detections and reducing the complexity of PDCCH blind detection.

In addition, for the number of PDCCHs directly determined by the configuration, the number of PDCCHs received by the terminal is clear, which helps to quickly determine whether multiple PDCCHs used to transmit the first information are all received, and may save scheduling delay to a certain extent.

In addition, for the method in which each PDCCH transmits partial information of the first information of the same size, the number of bits of the partial information of the first information carried by each PDCCH is the same, so that the respective parsing performance of each PDCCH is the same, thereby ensuring the probability of successful reception of the PDCCH. Meanwhile, the respective number of bits of the partial information of the first information carried by each PDCCH is determined, and the DCI of the same size may be used for blind detection of PDCCH, thereby facilitating blind detection and reducing the implementation complexity of blind detection.

In addition, the number of bits corresponding to the existing DCI format is used as the number of bits of the partial information of the first information transmitted on the control channel, which avoids increasing the number of blind detections due to the addition of different numbers of bits. That is, the control information obtained through blind detection based on the number of bits corresponding to the existing DCI format may be control information used for transmitting the first information, or may be control information used for determining the number of bits of the partial information of the first information.

In addition, the sum of the numbers of bits corresponding to at least two existing DCI formats are used as the number of bits of partial information of the first information transmitted on the PDCCH, which reduces the number of PDCCHs, thereby improving the transmission efficiency of the control channel.

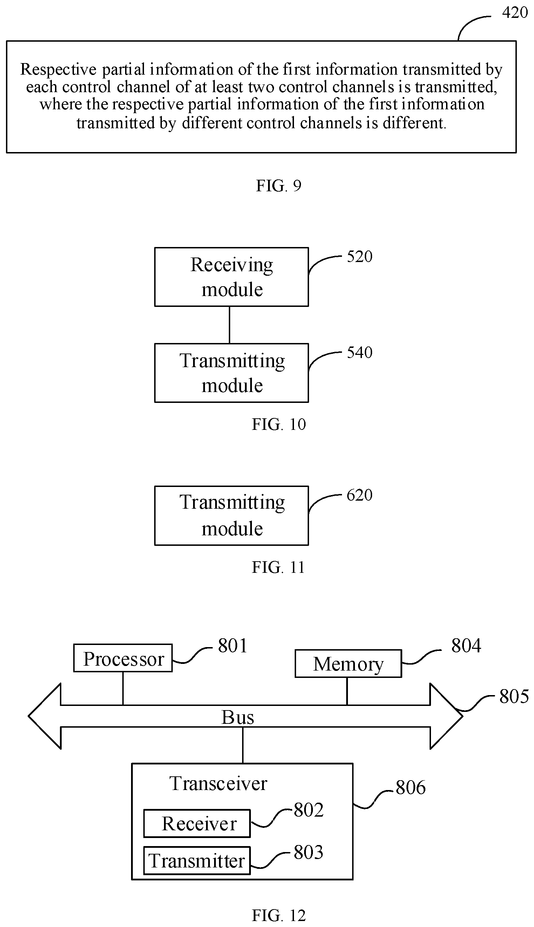

FIG. 9 illustrates a flowchart of an information transmitting method provided in an embodiment of the present disclosure. The method is performed by a network device which may be the network device 20 in the mobile communication system illustrated in FIG. 1. The method may include the following operations.

In Operation 420: respective partial information of the first information transmitted on each control channel of at least two control channels is transmitted, where the respective partial information of the first information transmitted on different control channels is different.

In some embodiments, the first information is used for scheduling at least two physical channels. The physical channel may be at least one of an uplink physical channel or a downlink physical channel.

In some embodiments, the first information includes: scheduling information; or, scheduling information and check information. The check information is used for checking reception correctness of the scheduling information. The scheduling information may also be referred to as complete scheduling information. That is, the first information may include only the complete scheduling information. Alternatively, the first information may include the complete scheduling information and the check information used to check whether the complete scheduling information is correctly received by the terminal.

The scheduling information is used for scheduling transmission of the at least two physical channels, where the number of control channels used to transmit the scheduling information is less than or equal to the number of physical channels. That is, the number of the at least two control channels is less than or equal to the number of physical channels.

The at least two physical channels scheduled by the scheduling information include at least one of physical channels as follows:
- an uplink physical channel;
- a downlink physical channel; or
- an uplink physical channel and a downlink physical channel.

In one example, the scheduling information is used for scheduling at least two PUSCHs simultaneously. In another example, the scheduling information is used for scheduling at least two PDSCHs simultaneously. In another example, the scheduling information is used for scheduling at least one PUSCH and at least one PDSCH simultaneously.

In some embodiments, the scheduling information includes at least one piece of information as follows:
- a time-domain resource for data transmission;
- a frequency-domain resource for data transmission;
- an MCS;
- a precoding codebook;
- power control information (only for uplink transmission);
- a HARQ process ID;
- an RV; or
- NDI.

Exemplarily, the network device transmits the respective partial information of the first information transmitted on each control channel of at least two control channels, where the respective partial information of the first information transmitted on different control channels is different, and the first information is used for scheduling transmission of at least two physical channels.

In some embodiments, the control channel is a PDCCH. That is, the first information is transmitted on at least two PDCCHs in blocks; and the terminal receives the respective partial information of the first information transmitted on each PDCCH of at least two PDCCHs. The respective partial information of the first information transmitted on different PDCCHs is different, and the scheduling information is used for scheduling the transmission of at least two physical channels.

The first information is transmitted on at least two control channels, each control channel of the at least two control channels is used to transmit respective partial information of the first information, and the respective partial information of the first information transmitted on each control channel of the at least two control channels may be combined into the complete first information.

The partial information of the first information refers to multiple blocks (pieces) of information which are overlapping, partially overlapping, or non-overlapping obtained by dividing the first information. In the embodiment, the example is made in which the respective partial information of the first information transmitted on each control channel is information non-overlapping with one other. In some embodiments, each partial information of the first information is transmitted on one control channel. That is, each control channel of the at least two control channels is used to transmit respective partial information of the first information, the respective partial information is a part of the first information, and the respective partial information of the first information transmitted on different control channels is different from each other.

The partial information of the first information includes at least one of:
- all of the scheduling information;
- a part of the scheduling information;
- all of the check information; or
- a part of the check information.

FIG. 3 illustrates a schematic diagram of the partial information of the first information carried by at least two control channels provided in an embodiment of the present disclosure. In FIG. 3 (a), a part of the scheduling information is transmitted on a control channel 1, a part of the scheduling information is transmitted on a control channel 2, and a part of the scheduling information and all of the check information are transmitted on a control channel 3. In FIG. 3 (b), a part of the scheduling information is transmitted on the control channel 1, a part of the scheduling information and a part of the check information are transmitted on the control channel 2, and a part of the check information is transmitted on the control channel 3. In FIG. 3 (c), all of the scheduling information is transmitted on the control channel 1, and all of the check information is transmitted on the control channel 2. The above are only examples of the respective partial information of the first information transmitted on each control channel. The present disclosure does not limit the respective partial information of the first information carried by each control channel.

In some embodiments, bits in the first information are divided into at least two bit parts, and the at least two bit parts are transmitted on at least two control channels, and different control channels transmit different bit parts.

It should be noted that the partial information of the first information may also be referred to as partial scheduling information, valid information, or other names.

In addition to the partial information of the first information, each control channel of the at least two control channels further carries at least one piece of information as follows:
- block check information;
- a serial number of the control channel;
- a serial number of the partial information of the first information transmitted on the control channel;
- a total number of control channels for transmitting the first information; or
- a total number of pieces of partial information into which the first information is divided.

The block check information is used for checking the reception correctness of partial information of the first information transmitted on a current control channel. The serial number of the control channel is used for indicating a serial number of the current control channel in the at least two control channels. The serial number of the partial information of the first information transmitted on the control channel is used for indicating a serial number of the partial information of the first information transmitted on the current control channel among all pieces of partial information into which the first information is divided.

For a first control channel of the at least two control channels, the first control channel is any one of the at least two control channels, and the first control channel is used to transmit first partial information of the first information. In addition to the first partial information of the first information, the first control channel further carries at least one piece of information as follows:
- first block check information, used for checking the reception correctness of the first partial information of the first information transmitted on the first control channel;
- a serial number of the first control channel;
- a serial number of the first partial information of the first information transmitted on the first control channel;
- a total number of the at least two control channels; or
- a total number of pieces of partial information into which the first information is divided.

In some embodiments, one of the at least two control channels further carries information indicating termination of transmission. This information is used for informing the terminal that the at least two control channels have been fully received. In some embodiments, the control channel is the last control channel of the at least two control channels. The last control channel refers to at least one of channels as follows: a control channel with a latest time; a control channel with a highest frequency-domain position; or a control channel with a lowest frequency-domain position.

In some embodiments, a bit threshold is set for the number of bits of the partial information of the first information carried on a single control channel, and the number of bits of the respective partial information of the first information transmitted on each control channel does not exceed the bit threshold. That is, the number of bits of the partial information of the first information is less than or equal to the bit threshold. For example, the bit threshold is 140 bits. The bit threshold is related to at least one factor of a DCI format or a DCI encoding mode.

In some embodiments, based on the first information, the respective partial information of the first information transmitted on each control channel of the at least two control channels is determined through bit information cascading.

Please refer to FIG. 4, the first information includes scheduling information 31 and check information 32 for the scheduling information 31. The first information is divided into first partial information 33, second partial information 35 and third partial information 37 connected end to end. Block check information (e.g., first block check information 34, second block check information 36 and third block check information 38 illustrated in FIG. 4) is generated for the three pieces of partial information of the first information. That is, the respective partial information of the first information transmitted on each control channel is obtained.

In some other embodiments, based on the first information, the respective partial information of the first information transmitted on each control channel of the at least two control channels is determined through bit information mapping.

Please refer to FIG. 5, the first information includes the scheduling information and the check information for the scheduling information. The first information is divided into different groups of sub-blocks. The figure takes the example in which the first information is divided into three groups of sub-blocks: blank sub-blocks, diagonal shaded sub-blocks and vertical shaded sub-blocks. The mapping rule takes the example in which the scheduling information portion is divided into blank sub-blocks, diagonal shaded sub-blocks and vertical shaded sub-blocks that are equally gapped and the check information portion is taken as one diagonal shaded sub-block. Among them, the blank sub-blocks are combined into the first partial information (that is, the first partial information includes 6 blank sub-blocks), which is transmitted on the control channel 1 after the first block check information is generated. The diagonal shaded sub-blocks are combined into the second partial information (that is, the second partial information includes 7 diagonal shaded sub-blocks), which is transmitted on the control channel 2 after the second block check information is generated. The vertical shaded sub-blocks are combined into the third partial information (that is, the third partial information includes 6 vertical shaded sub-blocks), which is transmitted on the control channel 3 after the third block check information is generated. FIG. 5 only illustrates one rule for mapping bit information, i.e., taking dividing the first information into three groups of sub-blocks as an example. However, the rule for bit information mapping is not limited thereto, which is not limited in the present disclosure.

The at least two control channels may be transmitted within the same or different time units. That is, the at least two control channels are transmitted within the same time unit; or the at least two control channels are transmitted within different time units.

In a case where the at least two control channels are transmitted within the same time unit, the at least two control channels are transmitted in different control channel candidates that are within the same time unit, or the at least two control channels are transmitted in different control channel units of the same control channel candidate.

The time unit is one of:
- a symbol set;
- a search space;
- a slot;
- a sub-frame; and
- a radio frame.

In some embodiments, the at least two control channels are transmitted within the same time unit and are transmitted in different control channel candidates. The order of the at least two control channels is used to determine the first information, and the order of the at least two control channels is determined by at least one of manners as follows:
- determining the order of the at least two control channels according to an order of sequence numbers of the control channel candidates where the at least two control channels are located;
- determining the order of the at least two control channels according to an order of reception times of the control channel candidates where the at least two control channels are located;
- determining the order of the at least two control channels according to an order of transmission times of the control channel candidates where the at least two control channels are located; or
- determining the order of the at least two control channels according to an order of frequency domains of the control channel candidates where the at least two control channels are located.

In some embodiments, in a case where the at least two control channels are transmitted within the same time unit and transmitted in different control channel candidates, if the time of the control channel candidates where the at least two control channels are located is the same, the order of the at least two control channels is determined according to the frequency-domain order of the control channel candidates where the at least two control channels are located.

In some embodiments, the at least two control channels are transmitted within the same time unit and transmitted in different CCEs of the same control channel candidate.

In some embodiments, in the case where the at least two control channels are transmitted within the same time unit, the at least two control channels have the same aggregation level. For example, when the control channel is a PDCCH, the number of CCEs occupied by each PDCCH is the same.

In some other embodiments, in the case where the at least two control channels are transmitted within the same time unit, the at least two control channels have different aggregation levels. For example, the respective aggregation level of each control channel may be configured individually.

In the case where the at least two control channels have the same aggregation level, after the first control channel is received through blind detection, the receiving position(s) of other control channel(s) may be obtained. That is, the first control channel of the at least two control channels is received using blind detection, and the receiving positions of other control channels of the at least two control channels are determined based on a receiving position of the first control channel. For example, in response to receiving the first control channel at a CCE2 in one control channel, it may be determined that the second control channel may be received at a CCE3, and so on. In this way, the number of blind detections is reduced and the transmission efficiency of the control channel is improved.

In some embodiments, the at least two control channels are transmitted within different time units, and each time unit includes one control channel. The order of the at least two control channels is used to determine the first information, and the order of the at least two control channels is determined according to the order of different time units.

Different time units have one of relationships as follows:
- being continuous time units; and
- being equally gapped time units.

The time unit is one of:
- a symbol set;
- a search space; and
- a slot.

For example, the different time units may be continuous slots or equally gapped slots. For another example, the different time units may be continuous symbol sets or equally gapped symbol sets. For another example, the different time units may be search spaces, which are within the same slot or different slots, corresponding to the same search space ID. For another example, the different time units may be search spaces with increasing search space ID or decreasing search space ID within the same slot.

Based on the above relationship between different time units, after the first control channel is received through blind detection, the receiving positions of other control channels may be obtained. That is, the first control channel of the at least two control channels is received using blind detection, and the receiving positions of other control channels of the at least two control channels are determined based on a receiving position of the first control channel. For example, the different time units are consecutive symbol sets. In response to receiving the first control channel in a symbol 0, it may be determined that the second control channel may be received in a symbol 1, and so on. In this way, the number of blind detections is reduced and the detection efficiency of the control channel is improved.

In some embodiments, the at least two control channels transmitted within different time units have at least one of relationships as follows:
- the at least two control channels occupying a same time-domain resource within different time units; or
- the at least two control channels occupying a same frequency-domain resource within different time units.

The same time-domain resource refers to that a relative position of a time-domain resource occupied by each of the at least two control channels in their respective time unit is the same. For example, the time-domain resource occupied by each of the at least two control channels is the third symbol in a respective slot where each of the at least two control channels is located.

In some embodiments, the number of bits of the partial information of the first information transmitted on each control channel is determined according to at least one piece of information as follows:
- a number of bits of the first information;
- a number of control channels;
- a configured number of bits of the partial information of the first information transmitted on each control channel; or
- a number of bits determined based on a DCI format.

For example, the number of bits of the partial information of the first information is a result of rounding up the number of bits of the first information divided by the number of control channels. For another example, the number of bits of the partial information of the first information is a number of bits determined according to transmission configuration. For another example, the number of bits of the partial information of the first information is the number of bits determined according to the DCI format, such as the number of bits of the partial information of the first information is the number of bits corresponding to DCI format 0_1.

It should be noted that, in some embodiments, during the transmission process, it is required that the number of bits of the partial information of the first information of at least two control channels be the same. If there is one control channel (e.g., the last control channel) that actually transmits less information bits than other control channels, redundant bits are added to it, so that the number of bits of the partial information of the first information transmitted on each control channel is the same.

The number of the control channels is determined based on one piece of information as follows:
- a number of control channels configured by a network device;
- a maximum number of schedulable data channels;
- a maximum number of schedulable carriers; and
- a number of carriers in a carrier set.

The number of bits determined based on the DCI format is one of:
- any one of numbers of bits corresponding to the DCI format; and
- a sum of at least two of the numbers of bits corresponding to the DCI format.

For example, the number bits determined based on the DCI format is any one of the numbers of bits corresponding to DCI formats 0_0, 0_1, 0_2, 1_0, 1_1, and 1_2. For another example, the number of bits determined based on the DCI format is the sum of at least two of the numbers of bits corresponding to DCI formats 0_0, 0_1, 0_2, 1_0, 1_1, and 1_2, such as the sum of the numbers of bits corresponding to DCI format 0_0 and DCI format 0_1.

It should be noted that the number of bits corresponding to the control information format of the DCI may be the number of bits determined based on configuration, or the number of bits corresponding to the DCI format after the DCI format is aligned based on an alignment rule. Here, alignment refer to that when two DCI formats have different sizes, redundant bits are added to the DCI format with fewer bits so that the sizes of the two DCI formats are the same.

To sum up, in the method provided in the embodiments of the present disclosure, through receiving the first information that is transmitted on the at least two control channels in blocks, the transmission of the first information is not constrained by the size of the number of bits that can be carried by the control channel, thereby improving the flexibility of transmitting the first information. Meanwhile, the bits of control channel available for transmission are fully utilized,, thereby reducing the complexity of control channel detection, and improving the efficiency of information transmission.

In addition, the number of physical channels scheduled by the first information is greater than or equal to the number of control channels, so that more physical channels may be scheduled through fewer control channels, thereby improving the flexibility and efficiency of scheduling and saving control channel resources.

In addition, through setting block check information for the partial information of the first information transmitted on the control channel, the reception correctness of the partial information of the first information may be checked, thereby ensuring the accuracy and correctness of the transmission of the partial information the first information, and improving the scheduling efficiency.

In addition, the at least two control channels may be transmitted within the same time unit or different time units, which improves scheduling flexibility.

FIG. 10 illustrates a block diagram of a structure of an information receiving apparatus provided in an embodiment of the present disclosure. The apparatus has the function of implementing the above-mentioned example methods of the terminal, where the apparatus may be implemented by hardware or by hardware performing corresponding software. The apparatus may be the terminal described above, or may be arranged in the terminal. As illustrated in FIG. 10, the apparatus may include a receiving module 520, and the receiving module 520 may be implemented by a receiver in the communication device illustrated in FIG. 12.

The receiving module 520 is configured to receive respective partial information of the first information transmitted on each control channel of at least two control channels, where the respective partial information of the first information transmitted on different control channels is different.

In some embodiments, the first information is used for scheduling at least two physical channels. The physical channel may be at least one of an uplink physical channel or a downlink physical channel.

In some embodiments, the first information includes: scheduling information; or, scheduling information and check information. The check information is used for checking reception correctness of the scheduling information. The scheduling information may also be referred to as complete scheduling information. That is, the first information may include only the complete scheduling information. Alternatively, the first information may include the complete scheduling information and the check information used to check whether the complete scheduling information is correctly received by the terminal.

The scheduling information is used for scheduling transmission of the at least two physical channels, where the number of control channels used to transmit the scheduling information is less than or equal to the number of physical channels. That is, the number of the at least two control channels is less than or equal to the number of physical channels.

The at least two physical channels scheduled by the scheduling information include at least one of physical channels as follows:
- an uplink physical channel;
- a downlink physical channel; or
- an uplink physical channel and a downlink physical channel.

In one example, the scheduling information is used for scheduling at least two PUSCHs simultaneously. In another example, the scheduling information is used for scheduling at least two PDSCHs simultaneously. In another example, the scheduling information is used for scheduling at least one PUSCH and at least one PDSCH simultaneously.

In some embodiments, the scheduling information includes at least one piece of information as follows:
- a time-domain resource for data transmission;
- a frequency-domain resource for data transmission;
- an MCS;
- a precoding codebook;
- power control information (only for uplink transmission);
- a HARQ process ID;
- an RV; or
- NDI.

Exemplarily, the terminal receives the respective partial information of the first information transmitted on each control channel of at least two control channels, where the respective partial information of the first information transmitted on different control channels is different, and the scheduling information is used for scheduling transmission of at least two physical channels.

In some embodiments, the control channel is a PDCCH. That is, the first information is transmitted on at least two PDCCHs in blocks; and the terminal receives the respective partial information of the first information transmitted on each PDCCH of at least two PDCCHs. The respective partial information of the first information transmitted on different PDCCHs is different, and the scheduling information is used for scheduling the transmission of at least two physical channels.

The first information is transmitted on at least two control channels, each control channel of the at least two control channels is used to transmit the respective partial information of the first information, and the respective partial information of the first information transmitted on each control channel of the at least two control channels may be combined into the complete first information.

The partial information of the first information refers to multiple blocks (pieces) of information which are overlapping, partially overlapping, or non-overlapping obtained by dividing the first information. In the embodiment, the example is made in which the respective partial information of the first information transmitted on each control channel is information non-overlapping with one other. In some embodiments, each partial information of the first information is transmitted on one control channel. That is, each control channel of the at least two control channels is used to transmit respective partial information of the first information, the respective partial information is a part of the first information, and the respective partial information of the first information transmitted on different control channels is different from each other.

The partial information of the first information includes at least one of:
- all of the scheduling information;
- a part of the scheduling information;
- all of the check information; or
- a part of the check information.

FIG. 3 illustrates a schematic diagram of the partial information of the first information carried by at least two control channels provided in an embodiment of the present disclosure. In FIG. 3 (a), a part of the scheduling information is transmitted on a control channel 1, a part of the scheduling information is transmitted on a control channel 2, and a part of the scheduling information and all of the check information are transmitted on a control channel 3. In FIG. 3 (b), a part of the scheduling information is transmitted on the control channel 1, a part of the scheduling information and a part of the check information are transmitted on the control channel 2, and a part of the check information is transmitted on the control channel 3. In FIG. 3 (c), all of the scheduling information is transmitted on the control channel 1, and all of the check information is transmitted on the control channel 2. The above are only examples of the respective partial information of the first information transmitted on each control channel. The present disclosure does not limit the respective partial information of the first information carried by each control channel.

In some embodiments, bits in the first information are divided into at least two bit parts, and the at least two bit parts are transmitted on at least two control channels, and different control channels transmit different bit parts.

It should be noted that the partial information of the first information may also be referred to as partial scheduling information, valid information, or other names.

In addition to the partial information of the first information, each control channel of the at least two control channels further carries at least one piece of information as follows:
- block check information;
- a serial number of the control channel;
- a serial number of the partial information of the first information transmitted on the control channel;
- a total number of control channels for transmitting the first information; or
- a total number of pieces of partial information into which the first information is divided.

The block check information is used for checking the reception correctness of partial information of the first information transmitted on a current control channel. The serial number of the control channel is used for indicating a serial number of the current control channel in the at least two control channels. The serial number of the partial information of the first information transmitted on the control channel is used for indicating a serial number of the partial information of the first information transmitted on the current control channel among all pieces of partial information into which the first information is divided.

For a first control channel of the at least two control channels, the first control channel is any one of the at least two control channels, and the first control channel is used to transmit first partial information of the first information. In addition to the first partial information of the first information, the first control channel further carries at least one piece of information as follows:
- first block check information, used for checking the reception correctness of the first partial information of the first information transmitted on the first control channel;
- a serial number of the first control channel;
- a serial number of the first partial information of the first information transmitted on the first control channel;
- a total number of the at least two control channels; or
- a total number of pieces of partial information into which the first information is divided.

In some embodiments, one of the at least two control channels further carries information indicating termination of transmission. This information is used for informing the terminal that the at least two control channels have been fully received. In some embodiments, the control channel is the last control channel of the at least two control channels. The last control channel refers to at least one of channels as follows: a control channel with a latest time; a control channel with a highest frequency-domain position; or a control channel with a lowest frequency-domain position.

In some embodiments, a bit threshold is set for the number of bits of the partial information of the first information carried on a single control channel, and the number of bits of the respective partial information of the first information transmitted on each control channel does not exceed the bit threshold. That is, the number of bits of the partial information of the first information is less than or equal to the bit threshold. For example, the bit threshold is 140 bits. The bit threshold is related to at least one factor of a DCI format or a DCI encoding mode.

In some embodiments, based on the respective partial information of the first information transmitted on each control channel of the at least two control channels, the first information is determined through bit information cascading. That is, based on the partial information of the first information carried in at least two control channels, the first information is determined through bit information cascading. In other words, according to an order of the at least two control channels, pieces of partial information of the first information carried in the at least two control channels are sequentially concatenated and spliced, to obtain the first information.

Please refer to FIG. 4, the first information includes scheduling information 31 and check information 32 for the scheduling information 31. The first information is divided into first partial information 33, second partial information 35 and third partial information 37 connected end to end. These three pieces of partial information of the first information have block check information respectively, such as first block check information 34, second block check information 36 and third block check information 38 illustrated in FIG. 4. That is, after receiving the partial information and the block check information of the first information on the three control channels, the terminal checks whether each partial information is received correctly by using the block check information. After confirming that each partial information is received correctly, the first partial information 33, the second partial information 35 and the third partial information 37 are connected end to end in the order of the control channels, to obtain the first information through the cascading.

In other embodiments, based on the respective partial information of the first information transmitted on each control channel of the at least two control channels, the first information is determined through bit information mapping. That is, based on the partial information of the first information carried by at least two control channels, the first information is determined through bit information mapping. That is, pieces of partial information of the first information carried in the at least two control channels are mapped according to a preset bit information mapping rule, so as to obtain the first information.

Please refer to FIG. 5, the first information includes the scheduling information and the check information for the scheduling information. The first information is divided into different groups of sub-blocks. The figure takes the example in which the first information is divided into three groups of sub-blocks: blank sub-blocks, diagonal shaded sub-blocks and vertical shaded sub-blocks. The mapping rule takes the example in which the scheduling information portion is divided into blank sub-blocks, diagonal shaded sub-blocks and vertical shaded sub-blocks that are equally gapped and the check information portion is taken as one diagonal shaded sub-block. Among them, the blank sub-blocks are combined into the first partial information (that is, the first partial information includes 6 blank sub-blocks), which is transmitted on the control channel 1 after the first block check information is generated The diagonal shaded sub-blocks are combined into the second partial information (that is, the second partial information includes 7 diagonal shaded sub-blocks), which is transmitted on the control channel 2 after the second block check information is generated. The vertical shaded sub-blocks are combined into the third partial information (that is, the third partial information includes 6 vertical shaded sub-blocks), which is transmitted on the control channel 3 after the third block check information is generated. After receiving the pieces of partial information of the first information and the pieces of block check information of the first information on the three control channels, the terminal checks whether each partial information is received correctly by using the respective block check information. After confirming that each partial information is received correctly, the sub-blocks in each partial information (i.e., each group of sub-blocks) are mapped to corresponding positions equally gapped according to the mapping rule, to obtain the first information through splicing. FIG. 5 only illustrates one rule for mapping bit information, i.e., taking dividing the first information into three groups of sub-blocks as an example. However, the rule for bit information mapping is not limited thereto, which is not limited in the present disclosure.

The at least two control channels may be transmitted within the same or different time units. That is, the at least two control channels are transmitted within the same time unit; or the at least two control channels are transmitted within different time units.

In a case where the at least two control channels are transmitted within the same time unit, the at least two control channels are transmitted in different control channel candidates that are within the same time unit, or the at least two control channels are transmitted in different control channel units of the same control channel candidate.

The time unit is one of:
- a symbol set;
- a search space;
- a slot;
- a sub-frame; and
- a radio frame.

In some embodiments, the at least two control channels are transmitted within the same time unit and are transmitted in different control channel candidates. The order of the at least two control channels is used to determine the first information, and the order of the at least two control channels is determined by at least one of manners as follows:
- determining the order of the at least two control channels according to an order of sequence numbers of the control channel candidates where the at least two control channels are located;
- determining the order of the at least two control channels according to an order of reception times of the control channel candidates where the at least two control channels are located;
- determining the order of the at least two control channels according to an order of transmission times of the control channel candidates where the at least two control channels are located; or
- determining the order of the at least two control channels according to an order of frequency domains of the control channel candidates where the at least two control channels are located.

In some embodiments, in a case where the at least two control channels are transmitted within the same time unit and transmitted in different control channel candidates, if the time of the control channel candidates where the at least two control channels are located is the same, the order of the at least two control channels is determined according to the frequency-domain order of the control channel candidates where the at least two control channels are located.

In some embodiments, the at least two control channels are transmitted within the same time unit and transmitted in different CCEs of the same control channel candidate.

In some embodiments, in the case where the at least two control channels are transmitted within the same time unit, the at least two control channels have the same aggregation level. For example, when the control channel is a PDCCH, the number of CCEs occupied by each PDCCH is the same.

In some other embodiments, in the case where the at least two control channels are transmitted within the same time unit, the at least two control channels have different aggregation levels. For example, the respective aggregation level of each control channel may be configured individually.

In the case where the at least two control channels have the same aggregation level, after the first control channel is received through blind detection, the receiving position(s) of other control channel(s) may be obtained. That is, the first control channel of the at least two control channels is received using blind detection, and the receiving positions of other control channels of the at least two control channels are determined based on a receiving position of the first control channel. For example, in response to receiving the first control channel at a CCE2 in one control channel, it may be determined that the second control channel may be received at a CCE3, and so on. In this way, the number of blind detections is reduced and the transmission efficiency of the control channel is improved.

In some embodiments, the at least two control channels are transmitted within different time units, and each time unit includes one control channel. The order of the at least two control channels is used to determine the first information, and the order of the at least two control channels is determined according to the order of different time units.

Different time units have one of relationships as follows:
- being continuous time units; and
- being equally gapped time units.

The time unit is one of:
- a symbol set;
- a search space; and
- a slot.

For example, the different time units may be continuous slots or equally gapped slots. For another example, the different time units may be continuous symbol sets or equally gapped symbol sets. For another example, the different time units may be search spaces, which are within the same slot or different slots, corresponding to the same search space ID. For another example, the different time units may be search spaces with increasing search space ID or decreasing search space ID within the same slot.

Based on the above relationship between different time units, after the first control channel is received through blind detection, the receiving positions of other control channels may be obtained. That is, the first control channel of the at least two control channels is received using blind detection, and the receiving positions of other control channels of the at least two control channels are determined based on a receiving position of the first control channel. For example, the different time units are consecutive symbol sets. In response to receiving the first control channel in a symbol 0, it may be determined that the second control channel may be received in a symbol 1, and so on. In this way, the number of blind detections is reduced and the detection efficiency of the control channel is improved.

In some embodiments, the at least two control channels transmitted within different time units have at least one of relationships as follows:
- the at least two control channels occupying a same time-domain resource within different time units; or
- the at least two control channels occupying a same frequency-domain resource within different time units.

The same time-domain resource refers to that a relative position of a time-domain resource occupied by each of the at least two control channels in their respective time unit is the same. For example, the time-domain resources occupied by each of the at least two control channels is the third symbol in a respective slot where each of the at least two control channels is located.

In some embodiments, the number of bits of the partial information of the first information transmitted on each control channel is determined according to at least one piece of information as follows:
- a number of bits of the first information;
- a number of control channels;
- a configured number of bits of the partial information of the first information transmitted on each control channel; or
- a number of bits determined based on a DCI format.

For example, the number of bits of the partial information of the first information is a result of rounding up the number of bits of the first information divided by the number of control channels. For another example, the number of bits of the partial information of the first information is a number of bits determined according to transmission configuration. For another example, the number of bits of the partial information of the first information is the number of bits determined according to the DCI format, such as the number of bits of the partial information of the first information is the number of bits corresponding to DCI format 0_1.

It should be noted that, in some embodiments, during the transmission process, it is required that the number of bits of the partial information of the first information of at least two control channels be the same. If there is one control channel (e.g., the last control channel) that actually transmits less information bits than other control channels, redundant bits are added to it, so that the number of bits of the partial information of the first information transmitted on each control channel is the same.

The number of the control channels is determined based on one piece of information as follows:
- a number of control channels configured by a network device;
- a maximum number of schedulable data channels;
- a maximum number of schedulable carriers; and
- a number of carriers in a carrier set.

The number of bits determined based on the DCI format is one of:
- any one of numbers of bits corresponding to the DCI format; and
- a sum of at least two of the numbers of bits corresponding to the DCI format.

For example, the number of bits determined based on the DCI format is any one of the numbers of bits corresponding to DCI formats 0_0, 0_1, 0_2, 1_0, 1_1, and 1_2. For another example, the number of bits determined based on the DCI format is the sum of at least two of the numbers of bits corresponding to DCI formats 0_0, 0_1, 0_2, 1_0, 1_1, and 1_2, such as the sum of the numbers of bits corresponding to DCI format 0_0 and DCI format 0_1.

It should be noted that the number of bits corresponding to the control information format of the DCI may be the number of bits determined based on configuration, or the number of bits corresponding to the DCI format after the DCI format is aligned based on an alignment rule. Here, alignment refer to that when two DCI formats have different sizes, redundant bits are added to the DCI format with fewer bits so that the sizes of the two DCI formats are the same

The receiving module 520 is configured to receive respective partial information of the first information transmitted on each PDCCH of at least two PDCCHs, where the respective partial information of the first information transmitted on different PDCCHs is different.

In some embodiments, the first information is used for scheduling at least two physical channels. The physical channel may be at least one of an uplink physical channel or a downlink physical channel.

In some embodiments, the first information includes: scheduling information; or, scheduling information and check information. The check information is used for checking reception correctness of the scheduling information. The scheduling information may also be referred to as complete scheduling information. That is, the first information may include only the complete scheduling information. Alternatively, the first information may include the complete scheduling information and the check information used to check whether the complete scheduling information is correctly received by the terminal.

The scheduling information is used for scheduling transmission of the at least two physical channels, where the number of PDCCHs used to transmit the scheduling information is less than or equal to the number of scheduled physical channels. The physical channel scheduled by the scheduling information includes at least one of physical channels as follows:
- an uplink physical channel;
- a downlink physical channel; or
- an uplink physical channel and a downlink physical channel.

In one example, the scheduling information is used for scheduling at least two PUSCHs simultaneously. In another example, the scheduling information is used for scheduling at least two PDSCHs simultaneously. In another example, the scheduling information is used for scheduling at least one PUSCH and at least one PDSCH simultaneously.

The scheduling information includes at least one piece of information as follows:
- a time-domain resource for data transmission;
- a frequency-domain resource for data transmission;
- an MCS;
- a precoding codebook;
- power control information (only for uplink transmission);
- a HARQ process ID;
- an RV; or
- NDI.

Exemplarily, the terminal receives the respective partial information of the first information transmitted on each PDCCH of at least two PDCCHs, where the respective partial information of the first information transmitted on different PDCCHs is different, and the first information is used for scheduling at least two physical channels.

The first information is transmitted on at least two PDCCHs, each PDCCH of the at least two PDCCHs is used to transmit respective partial information of the first information, and the respective partial information of the first information transmitted on each PDCCH of the at least two PDCCHs may be combined into complete first information.

The partial information of the first information refers to multiple blocks (pieces) of information which are overlapping, partially overlapping, or non-overlapping obtained by dividing the first information. In the embodiment, the example is provided where the respective partial information of the first information transmitted on each PDCCH is information which is non-overlapping with each other. In some embodiments, each partial information of the first information is transmitted on one PDCCH. That is, each PDCCH of the at least two PDCCHs is used to transmit the respective partial information of the first information, where the partial information is a part of the first information, and the respective partial information of the first information transmitted on different PDCCHs is different from each other.

The partial information of the first information includes at least one of:
- all of the scheduling information;
- a part of the scheduling information;
- all of the check information; or
- a part of the check information.

Taking the number of PDCCHs being three as an example. In an example, a first part of the scheduling information is transmitted on a PDCCH1, a second part of the scheduling information is transmitted on a PDCCH2, and a third part of the scheduling information and all of the check information are transmitted on a PDCCH3. In another example, all of the scheduling information is transmitted on the PDCCH1, a first part of the check information is transmitted on the PDCCH2, and a second part of the check information is transmitted on the PDCCH3. In another example, the first part of the scheduling information is transmitted on the PDCCH1, the second part of the scheduling information is transmitted on the PDCCH2, and all of the check information is transmitted on the PDCCH3. The above is only an example of respective partial information of the first information transmitted on each PDCCH. The present disclosure does not limit the partial information of the first information carried by each PDCCH.

In addition to the partial information of the first information, each PDCCH of the at least two PDCCHs further carries at least one piece of information as follows:
- block check information;
- a serial number of the PDCCH;
- a serial number of the partial information of the first information transmitted on the PDCCH;
- a total number of PDCCHs used to transmit the first information; or
- a total number of pieces of partial information into which the first information is divided.

The block check information is used for checking the reception correctness of the partial information of the first information transmitted on a current PDCCH. The serial number of the PDCCH is used for indicating a serial number of the current PDCCH in the at least two PDCCHs. The serial number of the partial information of the first information transmitted on the PDCCH is used for indicating the serial number of the partial information of the first information transmitted on the current PDCCH among all pieces of the partial information into which the first information is divided.

For a first PDCCH of the at least two PDCCHs, the first PDCCH is any one of the at least two PDCCHs, and the first PDCCH is used to transmit first partial information of the first information. In addition to the first partial information of the first information, the first PDCCH further carries at least one piece of information as follows:
- first block check information, used for checking the reception correctness of the first partial information of the first information transmitted on the first PDCCH;
- a serial number of the first PDCCH;
- a serial number of the first partial information of the first information transmitted on the first PDCCH;
- a total number of the at least two PDCCHs; or
- a total number of pieces of partial information into which the first information is divided.

In some embodiments, one of the at least two PDCCHs further carries information indicating termination of transmission. This information is used for informing the terminal that the at least two PDCCHs have been fully received. In some embodiments, the PDCCH is the last PDCCH of the at least two PDCCHs. The last PDCCH refers to at least one of following channels as follows: a PDCCH with a latest time; a PDCCH with a highest frequency-domain position; or a PDCCH with a lowest frequency-domain position.

In some embodiments, a bit threshold is set for the number of bits of the partial information of the first information carried on a single PDCCH, and the number of bits of the respective partial information of the first information transmitted on each PDCCH does not exceed the bit threshold. That is, the number of bits of the partial information of the first information is less than or equal to the bit threshold. For example, the bit threshold is 140 bits. The bit threshold is related to at least one factor of a DCI format or a DCI encoding mode.

In some embodiments, based on the respective partial information of the first information transmitted on each PDCCH of the at least two PDCCHs, the first information is determined by bit information cascading. That is, based on the partial information of the first information carried in the at least two PDCCHs, the first information is determined by bit information cascading. In other embodiments, based on the partial information of the first information transmitted on each PDCCH of the at least two PDCCHs, the first information is determined through bit information mapping. That is, based on the partial information of the first information carried by the at least two PDCCHs, the first information is determined through bit information mapping.

The at least two PDCCHs may be transmitted within the same time unit or different time units. That is, the at least two PDCCHs are transmitted within the same time unit; or the at least two PDCCHs are transmitted within different time units.

In a case where the at least two PDCCHs are transmitted within the same time unit, the at least two PDCCHs are transmitted in different PDCCH candidates within the same time unit, or the at least two PDCCHs are transmitted in different CCEs of the same PDCCH candidate.

The time unit is one of:
- a symbol set;
- a search space;
- a slot;
- a sub-frame; and
- a radio frame.

FIG. 7 illustrates a schematic diagram of transmission of at least two PDCCHs within the same time unit. Only one piece of first information is transmitted within each time unit. That is, multiple PDCCHs in each time unit are used to transmit the partial information of the same piece of the first information. The multiple PDCCHs use the same aggregation level.

FIG. 7(a) illustrates a schematic diagram of transmission of at least two PDCCHs through different PDCCH candidates within a time unit 1. As illustrated in the FIG. 7(a), a PDCCH1, a PDCCH2 and a PDCCH3 are taken as three independent PDCCHs, and are transmitted in the same time unit. The terminal performs blind detection on all PDCCH candidates within the time unit 1, and detects the PDCCH1, the PDCCH2 and the PDCCH3 respectively. After detection succeeds, the terminal determines the first information according to the partial information of the first information transmitted on the three PDCCHs. The manner of determining the first information according to the three pieces of partial information of the first information may be the bit information cascading manner as illustrated in FIG. 4, or the bit information mapping manner as illustrated in FIG. 5.

The order of the at least two PDCCHs is used to determine the first information. After receiving the at least two PDCCHs, the order of the at least two PDCCHs is determined in at least one of manners as follows:
- determining the order of the at least two PDCCHs according to an order of sequence numbers of the PDCCH candidates where the at least two PDCCHs are located;
- determining the order of the at least two PDCCHs according to an order of reception times of the PDCCH candidates where the at least two PDCCHs are located;
- determining the order of the at least two PDCCHs according to an order of transmission times of the PDCCH candidates where the at least two PDCCHs are located; or
- determining the order of the at least two PDCCHs according to an order of frequency domains of the PDCCH candidates where the at least two PDCCHs are located.

In some embodiments, in a case where the at least two PDCCHs are transmitted within the same time unit and transmitted in different PDCCH candidates, if the time of the PDCCH candidates where the at least two PDCCHs are located is the same, the order of the at least two PDCCHs is determined according to the frequency-domain order of the PDCCH candidates where the at least two PDCCHs are located.

FIG. 7(b) illustrates a schematic diagram of transmission of at least two PDCCHs through different CCEs of the same PDCCH candidate within the time unit 1. As illustrated in the FIG. 7(b), within one PDCCH candidate, the CCEs in the PDCCH candidate are divided and are used for a PDCCH1, a PDCCH2 and a PDCCH3 respectively. The number of CCEs occupied by each PDCCH is determined according to configuration, or according to the total number of CCEs and the number of PDCCHs. For example, the PDCCH candidate has 8 CCEs in total whose serial numbers correspond to 0 to 7, and the number of PDCCHs is 3, then, the number of CCEs occupied by each PDCCH is floor (8/3) = 2. That is, each PDCCH is configured to occupy 2 CCEs. In other words, a CCE0 and a CCE1 are used to transmit the PDCCH1, a CCE2 and a CCE3 are used to transmit the PDCCH2, and a CCE4 and a CCE5 are used to transmit the PDCCH3. Floor is a round-down operation.

In an implementation, in response to receiving the first information, the terminal performs blind detection for the PDCCH1 on the CCE0 and the CCE1 in the PDCCH candidate, performs blind detection for the PDCCH2 on the CCE2 and the CCE3, and performs blind detection for the PDCCH3 on the CCE4 and the CCE5. In another implementation, blind detection is performed on the CCE0 and the CCE1 in the PDCCH candidate for the PDCCH1, and if the PDCCH1 is successfully detected, the PDCCH2 and the PDCCH3 are directly parsed. For example, the PDCCH candidate includes 8 CCEs whose serial numbers correspond to 0 to 7, and the number of PDCCHs is 3, then, the number of CCEs occupied by each PDCCH is floor (8/3) = 2. That is, the CCE0 and the CCE1 are used to transmit the PDCCH1, the CCE2 and the CCE3 are used to transmit the PDCCH2, and the CCE4 and the CCE5 are used to transmit the PDCCH3.

Since PDCCHs have the same aggregation level, only one PDCCH needs be detected. After the first PDCCH is detected, subsequent PDCCHs are directly parsed according to the rule without the need for blind detection. That is, after the PDCCH1 is blindly detected on the CCE0 and the CCE1, the PDCCH2 is directly parsed on the CCE2 and the CCE3, and the PDCCH3 is parsed on the CCE4 and the CCE5. In another example, the aggregation level of the PDCCH is 1. In this case, if PDCCH1 is blindly detected on the CCE2, the PDCCH2 may be directly parsed on the CCE3, the PDCCH4 may be parsed on the CCE4, and so on. That is, the first PDCCH of the at least two PDCCHs is received in a blind detection manner, and the receiving positions of other PDCCHs of the at least two PDCCHs are determined based on the receiving position of the first PDCCH. In this way, blind detection only needs to be performed on the first received PDCCH, which reduces the number of blind detections for subsequent PDCCHs, and reduces the complexity of PDCCH detection.

FIG. 8 illustrates a schematic diagram of transmission of at least two PDCCHs within different time units. As illustrated in the FIG. 8, only one PDCCH is transmitted within each time unit. That is, a PDCCH1 is transmitted within a time unit 1, a PDCCH2 is transmitted within a time unit 2, and a PDCCH3 is transmitted within a time unit 3. The order of at least two PDCCHs is used to determine the first information, and the order of the PDCCHs is determined according to the order of different time units.

Different time units (i.e., the time unit 1 to the time unit 3) have one of relationships as follows:
- being continuous time units; and
- being equally gapped time units.

The time unit is one of:
- a symbol set;
- a search space; and
- a slot.

For example, the different time units may be continuous slots or equally gapped slots. For another example, the different time units may be continuous symbol sets or equally gapped symbol sets. For another example, the different time units may be search spaces, which are within the same slot or different slots, corresponding to the same search space ID. For another example, the different time units may be search spaces with increasing search space ID or decreasing search space ID within the same slot.

Based on the above relationship between different time units, after the first PDCCH is received through blind detection, the receiving positions of other PDCCHs may be obtained. That is, the first PDCCH of at least two PDCCHs is received using blind detection, and the receiving positions of other PDCCHs of at least two PDCCHs are determined based on the receiving position of the first PDCCH. For example, the different time units are consecutive slots. In response to receiving the first PDCCH within a slot 1, it may be determined that the second PDCCH may be received within a slot 2, and so on. In this way, the number of blind detections for PDCCHs after the first PDCCH is reduced, thereby improving the transmission efficiency of the control channel.

In some embodiments, the at least two PDCCHs transmitted within different time units have at least one of relationships as follows:
- at least two PDCCHs occupying a same time-domain resource within different time units; and
- at least two PDCCHs occupying a same frequency-domain resource within different time units.

The same time-domain resource refers to that a relative position of a time-domain resource occupied by each of the at least two PDCCHs in their respective time units is the same. For example, the time-domain resource occupied by each of the at least two PDCCHs is the third symbol in a respective slot where each of the at least two PDCCHs is located.

In some embodiments, the number of bits of the respective partial information of the first information transmitted on each PDCCH is determined according to at least one piece of information as follows:
- a number of bits of the first information;
- a number of PDCCHs;
- a configured number of bits of the partial information of the first information carried by each PDCCH; or
- a number of bits determined based on a DCI format.

In some embodiments, the number of bits of the respective partial information of the first information is determined according to the number of bits of the first information and the number of PDCCHs. An example is made by taking the number of bits of the first information being X and the number of PDCCHs being N.

One manner is that the number of bits of the partial information of the first information carried by the first N-1 PDCCHs is ceil(X/N), and the number of bits of the partial information of the first information carried by the last PDCCH is X-(N-1)*ceil(X/N). Alternatively, the number of bits of the partial information of the first information carried by the first N-1 PDCCHs is floor(XIN), and the number of bits of the partial information of the first information carried by the last PDCCH is X-(N-1)*floor(X/N). However, in this manner, the number of bits of the partial information of the first information carried by the last PDCCH may be significantly different from that of other PDCCHs. In this case, the probability of successful reception of the last PDCCH is different from that of other PDCCHs, which will affect the determination and parse of the first information. Ceil is the round-up operation, and floor is the round-down operation.

Another manner is that the respective number of bits of the partial information of the first information carried by each of the first N-X+floor(X/N)*N PDCCHs is floor(X/N), and the respective number of bits of the partial information of the first information carried by each of the remaining X-floor(XIN)*N PDCCHs is ceil(X/N). In this manner, the respective number of bits of the partial information of the first information carried by each PDCCH is almost the same, and the respective parsing performance of each PDCCH is almost the same, which may ensure the probability of successful reception of PDCCH. That is, the remainder obtained by dividing the number of bits of the first information by the number of PDCCHs is used as the number of PDCCHs with the number of bits rounded up, and the remaining number of PDCCHs is used as the number of bits rounded down. For the PDCCH with the number of bits rounded up, the corresponding number of bits is the result obtained by dividing the number of bits of the first information by the number of PDCCHs and rounding up. For the PDCCH with the number of bits rounded down, the corresponding number of bits is the result obtained by dividing the number of bits of the first information by the number of PDCCHs and rounding down.

The number of PDCCHs is determined based on one piece of information as follows:
- a number of control channels configured by a network device;
- a maximum number of schedulable data channels;
- a maximum number of schedulable carriers; and
- a number of carriers in a carrier set

That is, a format of the PDCCH may be explicitly determined according to network device configuration, for example, the number of PDCCHs is directly configured. Alternatively, the format of the PDCCH may be determined according to the configured maximum number of schedulable data channels/maximum number of schedulable carriers/number of carriers in the carrier set. For example, the number of PDCCHs is determined through the corresponding relationship in the following table.

**Table 1**

| Maximum number of schedulable data channels/maximum number of schedulable carriers/number of carriers in the carrier set | Number of PDCCHs |
|---|---|
| 3 | 2 |
| 4 | 3 |

In some other embodiments, the number of bits of the partial information of the first information is directly determined according to the configuration. That is, the configuration indicates the number of bits of the partial information of the first information.

In some other embodiments, the number of bits of the partial information of the first information is determined according to the DCI format. The DCI format used to determine the number of bits of the partial information of the first information may be any one of DCI formats as follows: 0_0, 0_1, 0_2, 1_0, 1_1, and 1_2. The number of bits of the partial information of the first information determined by this manner may be the number of bits of the DCI format determined according to the configuration, or may be the number of bits corresponding to the DCI format after alignment according to a specified DCI size alignment rule. In this case, it is necessary to include a DCI format indication in the PDCCH, and the DCI format indication is used to distinguish the DCI format for transmitting the first information and the DCI format for determining the number of bits of partial information of the first information. Alternatively, the serial number information in the PDCCH is used to implicitly distinguish the above two formats.

In the manner for determining the number of bits of the partial information of the first information according to the DCI format, the number of bits determined based on the control information format of the DCI (e.g., the DCI format 0_0, 0_1, 0_2, 1_0, 1_1, and 1_2) is one of numbers of bits as follows:
- any of the number of bits corresponding to the DCI format; and
- a sum of at least two of the number of bits corresponding to the DCI format.

That is, the number of bits of the partial information of the first information may be the number of bits corresponding to any one of the DCI formats 0_0, 0_1, 0_2, 1_0, 1_1, and 1_2. Alternatively, the number of bits of the partial information of the first information may be the sum of numbers of bits corresponding to any multiple formats.

It should be noted that the number of bits corresponding to the DCI format may be the number of bits determined based on the configuration, or the number of bits corresponding to the DCI format after the DCI format is aligned based on the alignment rule. Here, alignment refers to that when two DCI formats have different sizes, redundant bits are added to the smaller DCI format so that the sizes of the two DCI formats are the same.

When the number of bits of the partial information of the first information is the sum of the number of bits corresponding to multiple DCI formats, the number of PDCCHs may be reduced, thereby improving the transmission efficiency of the control channel. For example, the first information is 240 bits, the number of bits corresponding to the DCI format 0_0 is 50 bits, and the number of bits of the DCI format 0_1 is 70 bits; if the number of bits of the partial information of the first information transmitted on a PDCCH is determined to be 50 bits (which is the same as the DCI format 0_0), 5 PDCCHs are required; if the number of bits of the partial information of the first information transmitted on a PDCCH is determined to be 70 bits (which is the same as the DCI format 0_1), 4 PDCCHs are required; or if the number of bits of the partial information of the first information transmitted on a PDCCH is determined to be 120 bits (which is a sum of the DCI format 0_0 and the DCI format 0_1), only 2 PDCCHs are required.

It should be noted that, in some embodiments, during the transmission process, it is required that the number of bits of the partial information of the first information transmitted on at least two PDCCHs is the same. If there is one PDCCH (e.g., the last PDCCH) that actually transmits less information than the number of bits of other PDCCHs (i.e., PDCCHs other than the last PDCCH), redundant (padding) bits are added to the PDCCH with fewer bits, so that the respective number of bits of the respective partial information of the first information transmitted on each control channel is the same. For example, if the number of first information bits is X and the number of bits of the partial information of the first information carried by a configured PDCCH is Y, then there are ceil(X/Y) PDCCHs for transmission. The first floor(X/Y) PDCCHs each carry Y bits, and the last PDCCH carries X-Y*floor(X/Y) bits of information. Y*ceil(X/Y) padding bits are added to ensure that the sizes of pieces of partial information of the first information carried by multiple PDCCHs are the same, which facilitates blind detection. Padding bits are added only in the last PDCCH, which avoids the problem that the probability of successful reception of the last PDCCH is different from that of other PDCCHs due to the large difference between the number of bits carried by the last PDCCH and the number of bits carried by the other PDCCHs. Ceil is the round-up operation, and floor is the round-down operation.

The apparatus further includes a transmitting module 540, and the transmitting module 540 and the receiving module 520 are configured to transmit/receive data on at least two physical channels according to the first information.

After receiving the first information, the terminal obtains scheduling information for the physical channel. In some embodiments, the first information is information related to scheduling of the at least two physical channels.

The terminal transmits and/or receives data on the at least two physical channels according to the first information. For example, the terminal transmits data on at least two PUSCHs. For another example, the terminal receives data on at least two PDSCHs. For another example, the terminal transmits data on at least one PUSCH and receives data on at least one PDSCH.

FIG. 11 illustrates a block diagram of a structure of an information transmitting apparatus provided in an embodiment of the present disclosure. The apparatus has the function of implementing the above-mentioned method examples of the network device, and the function may be implemented by hardware or by hardware performing corresponding software. The apparatus may be the network device described above, or may be arranged in the network device. As illustrated in FIG. 11, the apparatus may include a transmitting module 620, where the transmitting module 620 may be implemented by a transmitter in a communication device illustrated in FIG. 12.

The transmitting module 620 is configured to transmit respective partial information of the first information transmitted on each control channel of at least two control channels, where the respective partial information of the first information transmitted on different control channels is different.

In some embodiments, the first information is used for scheduling at least two physical channels. The physical channel may be at least one of an uplink physical channel or a downlink physical channel.

In some embodiments, the first information includes: scheduling information; or, scheduling information and check information. The check information is used for checking reception correctness of the scheduling information. The scheduling information may also be referred to as complete scheduling information. That is, the first information may include only the complete scheduling information. Alternatively, the first information may include the complete scheduling information and the check information used to check whether the complete scheduling information is correctly received by the terminal.

The scheduling information is used for scheduling transmission of the at least two physical channels, where the number of control channels used to transmit the scheduling information is less than or equal to the number of physical channels. That is, the number of the at least two control channels is less than or equal to the number of physical channels.

The at least two physical channels scheduled by the scheduling information include at least one of physical channels as follows:
- an uplink physical channel;
- a downlink physical channel; or
- an uplink physical channel and a downlink physical channel.

In one example, the scheduling information is used for scheduling at least two PUSCHs simultaneously. In another example, the scheduling information is used for scheduling at least two PDSCHs simultaneously. In another example, the scheduling information is used for scheduling at least one PUSCH and at least one PDSCH simultaneously.

In some embodiments, the scheduling information includes at least one piece of information as follows:
- a time-domain resource for data transmission;
- a frequency-domain resource for data transmission;
- an MCS;
- a precoding codebook;
- power control information (only for uplink transmission);
- a HARQ process ID;
- an RV; or
- NDI.

Exemplarily, the network device transmits the respective partial information of the first information transmitted on each control channel of at least two control channels, where the respective partial information of the first information transmitted on different control channels is different, and the first information is used for scheduling transmission of at least two physical channels.

In some embodiments, the control channel is a PDCCH. That is, the first information is transmitted on at least two PDCCHs in blocks; and the terminal receives the respective partial information of the first information transmitted on each PDCCH of at least two PDCCHs. The respective partial information of the first information transmitted on different PDCCHs is different, and the scheduling information is used for scheduling the transmission of at least two physical channels.

The first information is transmitted on at least two control channels, each control channel of the at least two control channels is used to transmit respective partial information of the first information, and the respective partial information of the first information transmitted on each control channel of the at least two control channels may be combined into the complete first information.

The partial information of the first information refers to multiple blocks (pieces) of information which are overlapping, partially overlapping, or non-overlapping obtained by dividing the first information. In the embodiment, the example is made in which the respective partial information of the first information transmitted on each control channel is information non-overlapping with one other. In some embodiments, each partial information of the first information is transmitted on one control channel. That is, each control channel of the at least two control channels is used to transmit respective partial information of the first information, the respective partial information is a part of the first information, and the respective partial information of the first information transmitted on different control channels is different from each other.

The partial information of the first information includes at least one of:
- all of the scheduling information;
- a part of the scheduling information;
- all of the check information; or
- a part of the check information.

FIG. 3 illustrates a schematic diagram of the partial information of the first information carried by at least two control channels provided in an embodiment of the present disclosure. In FIG. 3 (a), a part of the scheduling information is transmitted on a control channel 1, a part of the scheduling information is transmitted on a control channel 2, and a part of the scheduling information and all of the check information are transmitted on a control channel 3. In FIG. 3 (b), a part of the scheduling information is transmitted on the control channel 1, a part of the scheduling information and a part of the check information are transmitted on the control channel 2, and a part of the check information is transmitted on the control channel 3. In FIG. 3 (c), all of the scheduling information is transmitted on the control channel 1, and all of the check information is transmitted on the control channel 2. The above are only examples of the respective partial information of the first information transmitted on each control channel. The present disclosure does not limit the respective partial information of the first information carried by each control channel.

In some embodiments, bits in the first information are divided into at least two bit parts, and the at least two bit parts are transmitted on at least two control channels, and different control channels transmit different bit parts.

It should be noted that the partial information of the first information may also be referred to as partial scheduling information, valid information, or other names.

In addition to the partial information of the first information, each control channel of the at least two control channels further carries at least one piece of information as follows:
- block check information;
- a serial number of the control channel;
- a serial number of the partial information of the first information transmitted on the control channel;
- a total number of control channels for transmitting the first information; or
- a total number of pieces of partial information into which the first information is divided.

The block check information is used for checking the reception correctness of partial information of the first information transmitted on a current control channel. The serial number of the control channel is used for indicating a serial number of the current control channel in the at least two control channels. The serial number of the partial information of the first information transmitted on the control channel is used for indicating a serial number of the partial information of the first information transmitted on the current control channel among all pieces of partial information into which the first information is divided.

For a first control channel of the at least two control channels, the first control channel is any one of the at least two control channels, and the first control channel is used to transmit first partial information of the first information. In addition to the first partial information of the first information, the first control channel further carries at least one piece of information as follows:
- first block check information, used for checking the reception correctness of the first partial information of the first information transmitted on the first control channel;
- a serial number of the first control channel;
- a serial number of the first partial information of the first information transmitted on the first control channel;
- a total number of the at least two control channels; or
- a total number of pieces of partial information into which the first information is divided.

In some embodiments, one of the at least two control channels further carries information indicating termination of transmission. This information is used for informing the terminal that the at least two control channels have been fully received. In some embodiments, the control channel is the last control channel of the at least two control channels. The last control channel refers to at least one of channels as follows: a control channel with a latest time; a control channel with a highest frequency-domain position; or a control channel with a lowest frequency-domain position.

In some embodiments, a bit threshold is set for the number of bits of the partial information of the first information carried on a single control channel, and the number of bits of the respective partial information of the first information transmitted on each control channel does not exceed the bit threshold. That is, the number of bits of the partial information of the first information is less than or equal to the bit threshold. For example, the bit threshold is 140 bits. The bit threshold is related to at least one factor of a DCI format or a DCI encoding mode.

In some embodiments, based on the first information, the respective partial information of the first information transmitted on each control channel of the at least two control channels is determined through bit information cascading.

Please refer to FIG. 4, the first information includes scheduling information 31 and check information 32 for the scheduling information 31. The first information is divided into first partial information 33, second partial information 35 and third partial information 37 connected end to end. Block check information (e.g., first block check information 34, second block check information 36 and third block check information 38 illustrated in FIG. 4) is generated for the three pieces of partial information of the first information. That is, the respective partial information of the first information transmitted on each control channel is obtained.

In some other embodiments, based on the first information, the respective partial information of the first information transmitted on each control channel of the at least two control channels is determined through bit information mapping.

Please refer to FIG. 5, the first information includes the scheduling information and the check information for the scheduling information. The first information is divided into different groups of sub-blocks. The figure takes the example in which the first information is divided into three groups of sub-blocks: blank sub-blocks, diagonal shaded sub-blocks and vertical shaded sub-blocks. The mapping rule takes the example in which the scheduling information portion is divided into blank sub-blocks, diagonal shaded sub-blocks and vertical shaded sub-blocks that are equally gapped and the check information portion is taken as one diagonal shaded sub-block. Among them, the blank sub-blocks are combined into the first partial information (that is, the first partial information includes 6 blank sub-blocks), which is transmitted on the control channel 1 after the first block check information is generated The diagonal shaded sub-blocks are combined into the second partial information (that is, the second partial information includes 7 diagonal shaded sub-blocks), which is transmitted on the control channel 2 after the second block check information is generated. The vertical shaded sub-blocks are combined into the third partial information (that is, the third partial information includes 6 vertical shaded sub-blocks), which is transmitted on the control channel 3 after the third block check information is generated. FIG. 5 only illustrates one rule for mapping bit information, i.e., taking dividing the first information into three groups of sub-blocks as an example. However, the rule for bit information mapping is not limited thereto, which is not limited in the present disclosure.

The at least two control channels may be transmitted within the same or different time units. That is, the at least two control channels are transmitted within the same time unit; or the at least two control channels are transmitted within different time units.

In a case where the at least two control channels are transmitted within the same time unit, the at least two control channels are transmitted in different control channel candidates that are within the same time unit, or the at least two control channels are transmitted in different control channel units of the same control channel candidate.

The time unit is one of:
- a symbol set;
- a search space;
- a slot;
- a sub-frame; and
- a radio frame.

In some embodiments, the at least two control channels are transmitted within the same time unit and are transmitted in different control channel candidates. The order of the at least two control channels is used to determine the first information, and the order of the at least two control channels is determined by at least one of manners as follows:
- determining the order of the at least two control channels according to an order of sequence numbers of the control channel candidates where the at least two control channels are located;
- determining the order of the at least two control channels according to an order of reception times of the control channel candidates where the at least two control channels are located;

- determining the order of the at least two control channels according to an order of transmission times of the control channel candidates where the at least two control channels are located; or
- determining the order of the at least two control channels according to an order of frequency domains of the control channel candidates where the at least two control channels are located.

In some embodiments, in a case where the at least two control channels are transmitted within the same time unit and transmitted in different control channel candidates, if the time of the control channel candidates where the at least two control channels are located is the same, the order of the at least two control channels is determined according to the frequency-domain order of the control channel candidates where the at least two control channels are located.

In some embodiments, the at least two control channels are transmitted within the same time unit and in different CCEs of the same control channel candidate.

In some embodiments, in the case where the at least two control channels are transmitted within the same time unit, the at least two control channels have the same aggregation level. For example, when the control channel is a PDCCH, the number of CCEs occupied by each PDCCH is the same.

In some other embodiments, in the case where the at least two control channels are transmitted within the same time unit, the at least two control channels have different aggregation levels. For example, the respective aggregation level of each control channel may be configured individually.

In the case where the at least two control channels have the same aggregation level, after the first control channel is received through blind detection, the receiving position(s) of other control channel(s) may be obtained. That is, the first control channel of the at least two control channels is received using blind detection, and the receiving positions of other control channels of the at least two control channels are determined based on a receiving position of the first control channel. For example, in response to receiving the first control channel at a CCE2 in one control channel, it may be determined that the second control channel may be received at a CCE3, and so on. In this way, the number of blind detections is reduced and the transmission efficiency of the control channel is improved.

In some embodiments, the at least two control channels are transmitted within different time units, and each time unit includes one control channel. The order of the at least two control channels is used to determine the first information, and the order of the at least two control channels is determined according to the order of different time units.

Different time units have one of relationships as follows:
- being continuous time units; and
- being equally gapped time units.

The time unit is one of:
- a symbol set;
- a search space; and
- a slot.

For example, the different time units may be continuous slots or equally gapped slots. For another example, the different time units may be continuous symbol sets or equally gapped symbol sets. For another example, the different time units may be search spaces, which are within the same slot or different slots, corresponding to the same search space ID. For another example, the different time units may be search spaces with increasing search space ID or decreasing search space ID within the same slot.

Based on the above relationship between different time units, after the first control channel is received through blind detection, the receiving positions of other control channels may be obtained. That is, the first control channel of the at least two control channels is received using blind detection, and the receiving positions of other control channels of the at least two control channels are determined based on a receiving position of the first control channel. For example, the different time units are consecutive symbol sets. In response to receiving the first control channel in a symbol 0, it may be determined that the second control channel may be received in a symbol 1, and so on. In this way, the number of blind detections is reduced and the detection efficiency of the control channel is improved.

In some embodiments, the at least two control channels transmitted within different time units have at least one of relationships as follows:
- the at least two control channels occupying a same time-domain resource within different time units; or
- the at least two control channels occupying a same frequency-domain resource within different time units.

The same time-domain resource refers to that a relative position of a time-domain resource occupied by each of the at least two control channels in their respective time units is the same. For example, the time-domain resource occupied by each of the at least two control channels is the third symbol in a respective slot where each of the at least two control channels is located.

In some embodiments, the number of bits of the partial information of the first information transmitted on each control channel is determined according to at least one piece of information as follows:
- a number of bits of the first information;
- a number of control channels;
- a configured number of bits of the partial information of the first information transmitted on each control channel; or
- a number of bits determined based on a DCI format.

For example, the number of bits of the partial information of the first information is a result of rounding up the number of bits of the first information divided by the number of control channels. For another example, the number of bits of the partial information of the first information is a number of bits determined according to transmission configuration. For another example, the number of bits of the partial information of the first information is the number of bits determined according to the DCI format, such as the number of bits of the partial information of the first information is the number of bits corresponding to DCI format 0_1.

It should be noted that, in some embodiments, during the transmission process, it is required that the number of bits of the partial information of the first information of at least two control channels be the same. If there is one control channel (e.g., the last control channel) that actually transmits less information bits than other control channels, redundant bits are added to it, so that the number of bits of the partial information of the first information transmitted on each control channel is the same.

The number of the control channels is determined based on one piece of information as follows:
- a number of control channels configured by a network device;
- a maximum number of schedulable data channels;
- a maximum number of schedulable carriers; and
- a number of carriers in a carrier set.

The number of bits determined based on the DCI format is one of:
- any one of numbers of bits corresponding to the DCI format; and
- a sum of at least two of the numbers of bits corresponding to the DCI format.

For example, the number bits determined based on the DCI format is any one of the numbers of bits corresponding to DCI formats 0_0, 0_1, 0_2, 1_0, 1_1, and 1_2. For another example, the number of bits determined based on the DCI format is the sum of at least two of the numbers of bits corresponding to DCI formats 0_0, 0_1, 0_2, 1_0, 1_1, and 1_2, such as the sum of the numbers of bits corresponding to DCI format 0_0 and DCI format 0_1.

It should be noted that the number of bits corresponding to the control information format of the DCI may be the number of bits determined based on configuration, or the number of bits corresponding to the DCI format after the DCI format is aligned based on an alignment rule. Here, alignment refer to that when two DCI formats have different sizes, redundant bits are added to the DCI format with fewer bits so that the sizes of the two DCI formats are the same.

It should be noted that, the description is made by taking the division of the above-mentioned functional modules as an example when the apparatus provided in the above embodiments implement its functions. In actual applications, the above-mentioned functions may be assigned to different functional modules according to actual needs. That is, the content structure of the device may be divided into different functional modules to complete all or some of the functions described above.

Regarding the apparatus in the above embodiments, the specific manner in which each module performs operations has been described specifically in the method embodiments, which will not be repeated here.

Please refer to FIG. 12, FIG. 12 illustrates a schematic diagram of a structure of a communication device (a terminal or a network device) provided in an embodiment of the present disclosure. The communication device may include a processor 801, a receiver 802, a transmitter 803, a memory 804 , and a bus 805.

The processor 801 includes one or more processing cores. The processor 801 performs various functional applications and information processing by running software program(s) and module(s). In some embodiments, the processor 801 may be configured to determine the first information after the receiving module 520 receives at least two control channels.

The receiver 802 and the transmitter 803 may be implemented as a transceiver 806, which may be a communication chip. The receiver 802 may be configured to perform the functions and operations of the aforementioned receiving module 520. The transmitter 803 may be configured to perform the functions and operations of the aforementioned transmitting module 620 and transmitting module 540.

The memory 804 is connected to the processor 801 by a bus 805. The memory 804 may be used to store a computer program, and the processor 801 may be configured to perform the computer program to perform the various operations performed by the terminal or the network device in the above method embodiments.

In addition, the memory 804 may be implemented by any type of volatile or non-volatile storage device or a combination thereof. The volatile or non-volatile storage device includes but is not limited to: a random access memory (RAM) and a read-only memory (ROM), an erasable programmable ROM (EPROM), an electrically EPROM (EEPROM), a flash memory or other solid-state storage technology, a compact disc ROM (CD-ROM), a digital video disc (DVD) or other optical storage, a tape cassette, a magnetic tape, a disk storage or other magnetic storage device.

When the communication device is implemented as the terminal, the processor and transceiver involved in the embodiments of the present disclosure may perform the operations performed by the terminal in any of the methods illustrated in FIG. 2 or FIG. 6, which will not be repeated here.

In a possible implementation, when the communication device is implemented as the terminal, the receiver 802 is configured to receive the first information, where the first information is transmitted on at least two control channels in blocks.

When the communication device is implemented as the network device, the processor and transceiver involved in the embodiments of the present disclosure may perform the operations performed by the network device in the method illustrated in FIG. 9, which will not be repeated here.

In a possible implementation, when the communication device is implemented as the network device, the transmitter 803 is configured to transmit the first information, where the first information is transmitted on at least two control channels in blocks.

Embodiments of the present disclosure further provide a computer-readable storage medium, in which a computer program is stored. The computer program is configured to be executed by a processor of a terminal or a network device, to perform the above-mentioned information receiving method or information transmitting method.

In some embodiments, the computer-readable storage medium may include: a ROM, a RAM, an solid state drive (SSD) or an optical disk, etc. Among them, the RAM may include the resistance RAM (ReRAM) and the dynamic RAM (DRAM).

Embodiments of the present disclosure further provide a chip, which includes a programmable logic circuit and/or program instructions. The chip, when running on a terminal or a network device, is configured to perform the above-mentioned information receiving method or information transmitting method.

Embodiments of the present disclosure further provide a computer program product or a computer program, which includes a computer instruction, and the computer instruction is stored in a computer-readable storage medium. A processor of a terminal or a network device reads the computer instruction from the computer-readable storage medium and executes the computer instruction, to perform the above-mentioned information receiving method or information transmitting method.

It should be understood that, the "indicate/indicated/indicating/indication" mentioned in the embodiments of the present disclosure may be a direct indication, may also be an indirect indication, or may mean that there is an indication of an association relationship. For example, A indicating B may mean that A directly indicates B, for example, B may be obtained by A; alternatively, A indicating B may mean that A indirectly indicates B, for example, A indicates C, and B may be obtained by C; alternatively, A indicating B may mean that there is an association relationship between A and B. In the description of the embodiments of the present disclosure, the term "correspond/corresponding/correspondence" may indicate that there is a direct or indirect correspondence between two, may also mean that there is an associated relationship between the two, or may also mean a relationship of indicating and being indicated or a relationship of configuring and being configured, etc. The "a plurality of/multiple" mentioned herein refers to two or more. "And/or" is an association relationship to describe associated objects, which indicates that there may be three kinds of relationships. For example, "A and/or B" may mean three cases where: A exists alone, both A and B exist, and B exists alone. The character "/" generally means that associated objects before and after "/" are in an "or" relationship. In addition, the operation numbers described herein merely illustrates a possible performing order between the operations. In some other embodiments, the above operations may also be performed out of the number order. For example, two operations with different numbers are performed simultaneously, or two operations with different numbers are performed in the opposite order to that illustrated in the figure, which is not limited in the embodiments of the present.

Those skilled in the art should be aware that in one or more of the above examples, the functions described in the embodiments of the present disclosure may be implemented by hardware, software, firmware or any combination thereof. When implemented using software, the functions may be stored on or transmitted over as one or more instructions or codes on a computer-readable medium. The computer-readable medium includes both a computer storage medium and a communication medium including any medium that facilitates transfer of a computer program from one place to another. A storage medium may be any available medium that may be accessed by a general purpose or dedicated purpose computer.

The above description is merely an exemplary embodiment of the present disclosure and is not intended to limit the present disclosure. Any modifications, equivalent substitutions, improvements, etc. made within the spirit and principles of the present disclosure shall be included in the protection scope of the present disclosure.

## Claims

1. An information receiving method, performed by a terminal, and comprising:
receiving respective partial information of first information transmitted on each control channel of at least two control channels, wherein the respective partial information of the first information transmitted on different control channels is different, and the first information is used for scheduling at least two physical channels.

2. The method according to claim 1, wherein the first information comprises:
scheduling information; or
the scheduling information and check information, the check information being used for checking reception correctness of the scheduling information.

3. The method according to claim 2, wherein partial information of the first information comprises at least one of:
all of the scheduling information;
a part of the scheduling information;
all of the check information; or
a part of the check information.

4. The method according to claim 1, wherein a first control channel of the at least two control channels further carries at least one piece of information as follows:
first block check information, used for checking reception correctness of first partial information of the first information transmitted on the first control channel;
a serial number of the first control channel;
a serial number of the first partial information of the first information transmitted on the first control channel;
a total number of the at least two control channels; or
a total number of pieces of partial information into which the first information is divided.

5. The method according to any one of claims 1 to 4, further comprising:
determining, based on the respective partial information of the first information transmitted on each control channel of the at least two control channels, the first information through bit information cascading; or
determining, based on the respective partial information of the first information transmitted on each control channel of the at least two control channels, the first information through bit information mapping.

6. The method according to any one of claims 1 to 4, wherein
a number of bits of the respective partial information of the first information transmitted on each control channel is less than or equal to a bit threshold.

7. The method according to claim 2, wherein a physical channel scheduled by the scheduling information comprises at least one of physical channels as follows:
a uplink physical channel;
a downlink physical channel; or
a uplink physical channel and a downlink physical channel.

8. The method according to claim 1, wherein
the at least two control channels are transmitted within a same time unit.

9. The method according to claim 8, wherein
the at least two control channels are transmitted in different control channel candidates that are within the same time unit.

10. The method according to claim 9, wherein an order of the at least two control channels is used to determine the first information, and the order of the at least two control channels is determined based on at least one of manners as follows:
determining the order of the at least two control channels according to an order of sequence numbers of control channel candidates where the at least two control channels are located;
determining the order of the at least two control channels according to an order of reception times of control channel candidates where the at least two control channels are located;
determining the order of the at least two control channels according to an order of transmission times of control channel candidates where the at least two control channels are located; or
determining the order of the at least two control channels according to an order of frequency domains of control channel candidates where the at least two control channels are located.

11. The method according to claim 8, wherein the at least two control channels are transmitted in different control channel units of a same control channel candidate.

12. The method according to any one of claims 8 to 11, wherein
the at least two control channels have a same aggregation level.

13. The method according to any one of claims 8 to 11, wherein the time unit is one of:
a symbol set;
a search space;
a slot;
a subframe; and
a radio frame.

14. The method according to claim 1, wherein the at least two control channels are transmitted within different time units, and each of the time units contains one of the at least two control channels.

15. The method according to claim 14, wherein the different time units have one of relationships as follows:
being continuous time units; and
being equally gapped time units.

16. The method according to claim 14, wherein the at least two control channels have at least one of relationships as follows:
the at least two control channels occupying a same time-domain resource within the different time units; or
the at least two control channels occupying a same frequency-domain resource within the different time units.

17. The method according to any one of claims 14 to 16, wherein an order of the at least two control channels is used to determine the first information, and the order of the at least two control channels is determined according to an order of the different time units.

18. The method according to claim 11 or 15, wherein the first control channel of the at least two control channels is received through blind detection, and receiving positions of other control channels of the at least two control channels are determined based on a receiving position of the first control channel.

19. The method according to claim 1, wherein a number of bits of the respective partial information of the first information transmitted on each control channel is determined according to at least one piece of information as follows:
a number of bits of the first information;
a number of the control channels;
a configured number of bits of the respective partial information of the first information transmitted on each control channel; or
a number of bits determined based on a downlink control information (DCI) format.

20. The method according to claim 19, wherein the number of the control channels is determined according to one piece of information as follows:
a configured number of control channels;
a maximum number of schedulable data channels;
a maximum number of schedulable carriers; or
a number of carriers in a carrier set.

21. The method according to claim 19, wherein the number of bits determined based on the DCI format is one of numbers of bits as follows:
any one of numbers of bits corresponding to the DCI format; and
a sum of at least two of the numbers of bits corresponding to the DCI format.

22. The method according to any one of claims 1 to 21, wherein a number of the at least two control channels is less than or equal to a number of the at least two physical channels.

23. An information transmitting method, performed by a network device and comprising:
transmitting respective partial information of first information transmitted on each control channel of at least two control channels, wherein the respective partial information of the first information transmitted on different control channels is different, and the first information is used for scheduling at least two physical channels.

24. The method according to claim 23, wherein the first information comprises:
scheduling information; or
the scheduling information and scheduling check information, the scheduling check information being used for checking reception correctness of the scheduling information.

25. The method according to claim 24, wherein partial information of the first information comprises at least one of:
all of the scheduling information;
a part of the scheduling information;
all of the check information; or
a part of the check information.

26. The method according to claim 23, wherein a first control channel of the at least two control channels further carries at least one piece of information as follows:
first block check information, used for checking reception correctness of first partial information of the first information transmitted on the first control channel;
a serial number of the first control channel;
a serial number of the first partial information of the first information transmitted on the first control channel;
a total number of the at least two control channels; or
a total number of pieces of partial information into which the first information is divided.

27. The method according to any one of claims 23 to 26, further comprising:
determining, based on the first information, the respective partial information of the first information transmitted on each control channel of the at least two control channels through bit information cascading; or
determining, based on the first information, the respective partial information of the first information transmitted on each control channel of the at least two control channels through bit information mapping.

28. The method according to any one of claims 23 to 26, wherein
a number of bits of the respective partial information of the first information transmitted on each control channel is less than or equal to a bit threshold.

29. The method according to claim 23, wherein a physical channel scheduled by the scheduling information comprises at least one of physical channels as follows:
a uplink physical channel;
a downlink physical channel; or
a uplink physical channel and a downlink physical channel.

30. The method according to claim 23, wherein
the at least two control channels are transmitted within a same time unit.

31. The method according to claim 30, wherein
the at least two control channels are transmitted in different control channel candidates that are within the same time unit.

32. The method according to claim 31, wherein an order of the at least two control channels is used to determine the first information, and the order of the at least two control channels is determined based on at least one of manners as follows:
determining the order of the at least two control channels according to an order of sequence numbers of control channel candidates where the at least two control channels are located;
determining the order of the at least two control channels according to an order of reception times of the control channel candidates where the at least two control channels are located;
determining the order of the at least two control channels according to an order of transmission times of control channel candidates where the at least two control channels are located; or
determining the order of the at least two control channels according to an order of frequency domains of control channel candidates where the at least two control channels are located.

33. The method according to claim 30, wherein the at least two control channels are transmitted in different control channel units of a same control channel candidate.

34. The method according to any one of claims 30 to 33, wherein
the at least two control channels have a same aggregation level.

35. The method according to any one of claims 30 to 33, wherein the time unit is one of:
a symbol set;
a search space;
a slot;
a subframe; and
a radio frame.

36. The method according to claim 23, wherein the at least two control channels are transmitted within different time units, and each of the time units contains one of the at least two control channels.

37. The method according to claim 36, wherein the different time units have one of relationships as follows:
being continuous time units; and
being equally gapped time units.

38. The method according to claim 36, wherein the at least two control channels have at least one of relationships as follows:
the at least two control channels occupying a same time-domain resource within the different time units; or
the at least two control channels occupying a same frequency-domain resource within the different time units.

39. The method according to any one of claims 36 to 38, wherein an order of the at least two control channels is used to determine the first information, and the order of the at least two control channels is determined according to an order of the different time units.

40. The method according to claim 33 or 37, wherein the first control channel of the at least two control channels is received through blind detection, and receiving positions of other control channels of the at least two control channels are determined based on a receiving position of the first control channel.

41. The method according to claim 23, wherein a number of bits of the respective partial information of the first information transmitted on each control channel is determined according to at least one piece of information as follows:
a number of bits of the first information;
a number of the control channels;
a configured number of bits of the respective partial information of the first information transmitted on each control channel; or
a number of bits determined based on a downlink control information (DCI) format.

42. The method according to claim 41, wherein the number of the control channels is determined according to one piece of information as follows:
a configured number of control channels;
a maximum number of schedulable data channels;
a maximum number of schedulable carriers; or
a number of carriers in a carrier set.

43. The method according to claim 41, wherein the number of bits determined based on the DCI format is one of numbers of bits as follows:
any one of numbers of bits corresponding to the DCI format; and
a sum of at least two of the numbers of bits corresponding to the DCI format.

44. The method according to any one of claims 23 to 43, wherein a number of the at least two control channels is less than or equal to a number of the at least two physical channels.

45. An information receiving apparatus, comprising: a receiving module, wherein
the receiving module is configured to receive respective partial information of first information transmitted on each control channel of at least two control channels, wherein the respective partial information of the first information transmitted on different control channels is different, and the first information is used for scheduling at least two physical channels.

46. An information transmitting apparatus, comprising: a transmitting module, wherein
the transmitting module is configured to transmit respective partial information of first information transmitted on each control channel of at least two control channels, wherein the respective partial information of the first information transmitted on different control channels is different, and the first information is used for scheduling at least two physical channels.

47. A computer-readable storage medium, wherein a computer program is stored in the computer-readable storage medium, and the computer program is configured to be executed by a processor to perform the information receiving method according to any one of claims 1 to 22, or the information transmitting method according to any one of claims 23 to 44.

48. A chip, comprising a programmable logic circuit and/or a program instruction, wherein the chip, when running, performs the information receiving method according to any one of claims 1 to 22, or the information transmitting method according to any one of claims 23 to 44.

49. A computer program product, comprising computer instructions, wherein the computer instructions are stored in a computer-readable storage medium, and a processor reads the computer instructions from the computer-readable storage medium and executes the computer instructions, to perform the information receiving method according to any one of claims 1 to 22, or the information transmitting method according to any one of claims 23 to 44.

50. A computer program, comprising computer instructions, wherein the computer instructions are stored in a computer-readable storage medium, and a processor reads the computer instructions from the computer-readable storage medium and executes the computer instructions, to perform the information receiving method according to any one of claims 1 to 22, or the information transmitting method according to any one of claims 23 to 44.
